# EUROPEAN PATENT SPECIFICATION

(11) **EP 2 541 018 B1**
(45) Date of publication and mention of the grant of the patent: **13.05.2020**
(21) Application number: 11736662.5
(22) Date of filing: 28.01.2011
(51) Int. Cl.: F02B 47/02, F02B 19/14, F02D 15/00

(54) **INTERNAL-COMBUSTION ENGINE WORKING WITH ALTERNATIVE FUELS**
MIT ALTERNATIVEN BRENNSTOFFEN ARBEITENDER VERBRENNUNGSMOTOR
MOTEUR À COMBUSTION INTERNE UTILISANT DES COMBUSTIBLES ALTERNATIFS POUR SON FONCTIONNEMENT

(30) Priority: 01.02.2010 ES 201000151
(43) Date of publication of application: 02.01.2013
(73) Proprietor: Diaz Escaño, Jesus Manuel, 29740 Torre del Mar- Malaga (ES)
(72) Inventor: Diaz Escaño, Jesus Manuel, 29740 Torre del Mar- Malaga (ES)
(74) Representative: Carpintero Lopez, Francisco
(86) International application number: PCT/ES2011/070051
(87) International publication number: WO 2011/092364

(56) References cited:
- DE-A1- 10 214 987
- ES-A1- 374 213
- GB-A- 495 391
- JP-A- 8 004 533
- JP-A- 56 075 913
- JP-A- 56 075 913
- US-A- 3 074 228
- US-A- 4 909 192
- US-A1- 2008 302 342
- US-A1- 2009 188 467
- US-A1- 2009 188 467
- US-B1- 7 367 306

## Description

As described by its title, the object of the present invention relates to an internal combustion engine that runs on alternative fuels, of the type of engines similar to Diesel engines (lacking spark plugs), but with some technical differences that differentiates it from the latter. It is conceived for operation using vegetable oil and water as fuels (alternative or renewable fuels), and specifically to a primordial method for dissociating hydrogen from water (electrolytic dissociation of the water molecule) that includes a specific chemical reaction, namely water hydrolysis with the vegetable oil esters, wherein this method is linked to the operation of the engine disclosed. Therefore, the present invention belongs to the field of internal combustion engines that run on biofuels, that is, alternative or renewable fuels instead of the currently used petroleum-derived fuels (gasoline and gasoil). The aforementioned invention has some important economic and environmental advantages over the internal combustion engines currently available in the market.

Different types of internal combustion engines are known that run on alternative fuels, which are generally the same engines that also run on petroleum derived fuels (gasoline and gasoil). On one hand, there are gasoline engines (Otto engines and rotary or Wankel engines), which can also use for their operation ethanol, also known as bioethanol or bioalcohol, which in these engines can constitute the only fuel (if they are designed specifically for this biofuel) or be mixed with gasoline. With the appropriate conditioning, the aforementioned engines can also use hydrogen as an alternative fuel. On the other hand, there are Diesel engines that can also use as an alternative fuel Biodiesel, also known as biogasoil or diester. Normally, a Diesel engine can use pure biodiesel or a mixture in any ratio with petroleum diesel. The most common mixture is 20% biodiesel and 80% petroleum diesel, known as "B20". When it is used pure it is named B100, known as "green gasoil".

One of the main drawbacks of the internal combustion engines that currently use these biofuels is that they are not sufficiently advantageous from an economic point of view over those that use fossil fuels, as the production of the biofuels requires a successive series of treatments in specialized plants that entail a cost, so that the final market price to the consumer is expensive. As examples of the preparation of these biofuels, in order to produce ethanol it is necessary to press sugar beet, or use cereals such as wheat, barley or maize to convert the starch from these starch-rich crops into sugars, which are in turn fermented and converted into ethanol. Lastly, the ethanol is distilled, acquiring its final form. Hydrogen is neither cheap nor easy to obtain; it is obtained in the laboratory by the action of diluted acids on metals such as zinc, and by electrolysis of water. Industrially, it is obtained from gaseous fuels. Biodiesel is obtained from vegetable or animal oils; in addition to the oil, producing it requires methanol, a hydroxide as a catalyst, and water. Its production requires a continuous plant in which a series or processes or treatments must be performed such as esterification, transesterification, neutralization, distillation, and decanting to finally obtain the biodiesel. Some of these processes require heat, with the resulting energy consumption and increase in the price of the resulting fuel. In certain circles it is commented that some users mix gasoil with vegetable oil in Diesel engines; even so, this option is not competitive. Even engines that could operate on vegetable oil only would not be as profitable as the engine of the present invention, as the advantage of the latter is that it can use in its combustion stroke approximately 1% to 50% less fuel (vegetable oil) than other engines, with the rest of the energy required for a competitive efficiency being supplied by the volume of water, which can be added in a ratio of approximately 1% to 50% of the instantaneous mix, used together with the vegetable oil in the combustion time of the proposed engine. It is obvious that one liter of desalted water is much cheaper than one liter of vegetable oil or one liter of any other biofuel or fossil fuel. In addition, the engine proposed in this invention, and specifically the one analyzed herein for a maximum efficiency, can use fuel volumes (of vegetable oil and water) in its injections wherein the sum of their volumes is even less than the volume of gasoil injected by Diesel engines.

Although the environmental advantages of this type of internal combustion engines using ethanol, hydrogen or biodiesel are important and obvious, as noted above the same cannot be said for the potential economic advantages to users, as the production of ethanol, hydrogen or biodiesel are all expensive due to the various treatments needed in their production process, so that the cost or market price of these fuels is generally similar or higher than those of fossil fuels (gasoline and gasoil).

It would therefore be desirable to have an internal combustion engine that could run on one or several types of biofuel which are less expensive to the user while respecting the environment, such as by jointly using vegetable oil and water as is the object of the engine disclosed in the present invention. It is logical and easy to see that using vegetable oil and water would be much more economical than using current biofuels (ethanol, hydrogen and biodiesel) and even than using fossil fuels (gasoline and gasoil). In this specific case, the vegetable oil does not require any treatment, while as discussed above in order to produce biodiesel, for example, a multitude of treatments are necessary starting from vegetable oil. Vegetable oil is obtained from a renewable source and helps improve the environment by preventing global warming, as the carbon dioxide (CO2 generated in its consumption will subsequently be absorbed by the plantations used to produce the vegetable oil, since plants absorb CO2 to carry out photosynthesis and grow. Thus, a closed cycle is created in which the CO2 generated by the combustion of the vegetable oil is reduced to practically zero, as it is absorbed by the plantations from which the vegetable oil is obtained, while the plantations contribute to the promotion of agriculture. An additional important advantage of vegetable oil and water as fuels is that no new infrastructure is needed to market them, as it is possible to use the existing fuel stations and dispensing equipment.

The water used in the type of engine disclosed will also be inexpensive compared to biofuels and fossil fuels currently used. The intention is not to use the fresh water supplied to households, but instead desalted water obtained from seas and oceans. At this time the cost of a cubic meter of desalted water is approximately 0.60 Euros, and could rise to 1 Euro per cubic meter due to the continuing rise in the price of oil. However, even at 1 Euro per cubic meter it is still very cheap as a fuel, as a liter of desalted water would cost 0.001 Euros. It is necessary to consider whether using water from seas and oceans is sustainable, and how this would affect our planet. The answer is clear: it is completely sustainable and would have no effect at all on the planet. A few calculations provide the answer: worldwide oil consumption is currently about 845,910 million liters per year. If vegetable oil and water were used exclusively worldwide as a fuel, with a water consumption in the mix for the engine of this invention in an approximate ratio of 1% to 50% (depending on the characteristics and configuration of the engine), the annual water consumption for a 20% ratio, for example, would be about 169,182 million liters. As three fourths of the surface of our planet are covered in water, the thickness of the water layer consumed worldwide in one year would be 0.00011 millimeters, so that in 1,000 years a water thickness of 0.11 millimeters would be used, or approximately one tenth of a millimeter per thousand years. Therefore, water and vegetable oil together can constitute a sustainable and renewable fuel, and the potential water consumption would not affect the planet in the least, as the water thickness used worldwide in a long time is negligible. As one could expect in view of the foregoing, an internal combustion engine that runs on vegetable oil and water as considered in the present invention presents economic, technical and environmental advantages of considerable importance that must be taken advantage of.

However, the internal combustion engines currently available in the market and referred to above, due to their resistance, structure, composition of their parts, configuration and form or operation cannot run on the proposed alternative fuels, that is, biofuels composed of vegetable oil and water.

US 2009188467 discloses the application of both fuel and water in engines and is characterised by the simultaneous vaporisation of these substances using one or more injection pumps of the type used for diesel and petrol injection engines. The fuel could be petrol, diesel, vegetable oil or another appropriate substance. Demineralised water is preferred to ordinary water. Blends of various fuels can also be used. The quantity of fuel and air can be adjusted for the proper operation of the engine. According to the method, water is transformed into high-pressure steam. The phase transformation requires relatively little energy. This energy can be obtained from the fuel which is transferred into the engine. The pressure of the steam and the gases which are released with the fuel explosion provide kinetic energy.

DE 10214987 A1 discloses an IC engine with improved combustion process that contains a crankshaft and gas-distribution gearbox and the extremely necessary systems of the injection Otto engine plus a system for fuel and water supply, induction and exhaust installation.

The internal combustion engine object of the present invention has been developed in order to create a new internal combustion engine that can run on alternative biofuels that are less expensive than current ones, in this case water and vegetable oil together.

A first object of the present invention relates in general to the development of new internal combustion engines, similar to Diesel engines (as they lack spark plugs) but with specific features that differ from these. The aforementioned internal combustion engines can be two-stroke or four-stroke engines, with any number of cylinders, of the type with indirect injection into an auxiliary pre-combustion chamber or direct injection into the combustion chamber of the cylinder, this being one of the differentiating features and the reason why this invention proposes two different embodiments by way of example which will be described further below. All of these engines share some essential and specific common features, namely that they run on a fuel consisting of vegetable oil and water, and in addition share the same working procedure, obviously adapted to their corresponding configuration. These engines are suitable for operating according to a process comprising mainly a method for dissociating hydrogen from water (electrolytic dissociation of the water molecule) and also including a specific reaction of water hydrolysis with the esters of the vegetable oil.. The vegetable oil used can be newly made or recycled, after filtering and removing solid residues.

A second object of the present invention relates to the aforementioned method related to the operation of the proposed engine, which will be specified by the detailed description of the execution and stages to be followed in the process, such that by operating the engine it is possible to obtain primordially with this procedure the dissociation of hydrogen from water (electrolytic dissociation of the water molecule), understanding this dissociation of hydrogen as a main or primary transformation or chemical reaction that is part of and in chain with a specific chemical reaction of water hydrolysis with the vegetable oil esters, the aforementioned chemical reactions taking place practically simultaneously, and these chemical reactions and thus the entire method being linked to the operation of the engine proposed in the present invention. This method is characterized in that said dissociation of hydrogen from water (electrolytic dissociation) and the specific chemical reaction of water hydrolysis with the vegetable oil esters take place practically simultaneously with the combustion.

More specifically, the internal combustion engine that uses for its operation alternative fuels object of the present invention relates in general to internal combustion engines, and more specifically according to a first embodiment of the invention, to a new type of internal combustion engine with four strokes and indirect injection into an auxiliary pre-combustion chamber, designed to work using as fuels vegetable oil and water. It is mainly composed of: a lubrication system, a cooling system, specific electrical and combustion systems, an engine block, a cylinder head, a cylinder head gasket, and an oil pan, and for each cylinder comprises: a piston, a connecting rod, a crankshaft, a combustion chamber, an auxiliary pre-combustion chamber, an intake valve, an exhaust valve, an intake duct, an exhaust duct, a specific over-pressure safety valve, and a robust glow plug located at the cylinder head and in the auxiliary pre-combustion chamber; and further comprises a special starting system for starting the engine, a special vegetable oil injector located at the cylinder head and in the auxiliary pre-combustion chamber, a special water injector located at the cylinder head and in the auxiliary pre-combustion chamber, a special cylinder sleeve, a special coating or a coating made of a special material for some basic elements of the engine, such as the piston, the cylinder head, the cylinder head base or its area that leads to the combustion chamber, the intake valve, the exhaust valve, the intake duct, the exhaust duct, and the auxiliary pre-combustion chamber and its nozzle connecting it to the combustion chamber, and further comprises two independent fuel tanks (one for vegetable oil and another for water), two independent injection systems (one for vegetable oil and another for water), and in its operation presents specific injection advances (one for vegetable oil and another for water). This engine is able, primordially in its operation, to comprise and encompass a method for dissociating hydrogen from water (electrolytic dissociation of hydrogen from water), thereby breaking the bonds of the water molecule and allowing the dissociation or breakup of this molecule into a positively charged hydrogen ion or proton H<+>, dissociated or free from the oxygen atom, and a negatively charged hydroxide ion OH<->. This method also includes a specific chemical reaction of water hydrolysis with the esters of the vegetable oil, so that the ester molecules are dissociated into two fragments, one of which reacts with the protons H<+> (hydrogen ions) of the dissociated water molecules to form carboxylic acid, and the other with the hydroxide ions OH<-> to form alcohol, these chemical reactions taking place virtually simultaneously, with these chemical reactions and therefore the entire process being linked to the operation of the engine disclosed in the present invention. This method is determined in that the dissociation of hydrogen from water (electrolytic dissociation) and the specific chemical reaction of water hydrolysis with the esters of the vegetable oil take place virtually simultaneously with combustion.

The combustion system employed by the four-stroke internal combustion engine with indirect injection designed to run using vegetable oil and water as fuels comprises, in each cylinder: a piston, combustion chambers, an auxiliary combustion chamber adjoining the combustion chamber, a nozzle connecting the two chambers, a crankshaft, a connecting rod, a cam, a flywheel, an intake valve, an exhaust valve, a glow plug, an air filter, an intake manifold and an exhaust manifold, the system mainly consisting in that the engine of the present invention uses two special injectors for each cylinder, one for vegetable oil and one for water, which alternatively inject fuel into the auxiliary pre-combustion chamber and to a lesser extent the combustion chamber, these chambers being made of a special material or having a special coating. The vegetable oil is injected first in an approximate ratio or proportion with respect to the total volume of vegetable oil plus water injected of 50% to 99% of the volume injected in each combustion, in the intake stroke, and subsequently the water is injected in an approximate ratio or proportion of 50% to 1% of the volume injected in each combustion, in the compression stroke. These proportions can be changed to the desired percentage values, provided the combustion of the mixture takes place efficiently. The sum of the volume of vegetable oil and water injected in one combustion in the engine of the present invention will be similar or equal to the volume of gasoil injected in Diesel engines in one of their combustions, naturally taking into account the power and rotation speed values of the engine, similar for both engines. In the development and analysis of this new engine, it may occur that maximum efficiency of combustions values are obtained using fuel volumes (of vegetable oil and water) in their injections with a total volume that is even less than the volume of gasoil injected in Diesel engines.

The lubrication system is similar to that of any other internal combustion engine, and is composed of an oil pan, an oil filter, an oil pump and ducts to lead the oil to the various lubrication points of the engine.

The electrical system used by the four-stroke internal combustion engine conceived for operation using as fuels vegetable oil and water, mainly comprises: battery, starter motor, injection electrical systems, crankshaft, alternator, electrical pump submerged in the vegetable oil tank and connected to the vegetable oil injection system for feeding fuel in the engine startup, and several electronic control units comprising at least a first electronic control unit that controls the timing of the multiport injection of vegetable oil, allowing to control the injectors so that the sequential injection in each cylinder takes place in the intake stroke at the precise time and with the required frequency according to the speed of rotation of the engine, with the necessary sensors and probes at the required locations, such as in the crankshaft or camshaft, membranes in the suction ducts, etc., as well as the actuators needed for this function, or the incorporation of any other devices needed, and a second electronic control unit similar to the first one that controls and regulates the timing of the water multipoint injection, allowing to control the injectors so that the sequential injection in each cylinder is performed in the compression stroke at the precise time and with the required frequency, according to the speed of rotation of the engine, having the necessary sensors and probes also located in the crankshaft, camshaft, etc. and the actuators needed for this function, or any other devices necessary.

The cooling system is similar to that of any other internal combustion engine, consisting of a water pump, fan, radiator and cooling water sleeves for the cylinders, combustion chambers and auxiliary pre-combustion chambers.

As regards the shape of the piston in each cylinder, it is possible to use, in addition to the currently known shapes, a new piston disclosed with a specific difference for the four-stroke internal combustion engine designed to run using vegetable oil and water as fuels, with the specific difference of having a notch with a shape defined by the intersection of a concave spherical cap and an inverted truncated cone, the intersections of which are rounded, this notch being centered at the base or head of the piston and having a circular diameter in the top base of the cone smaller than the diameter of the piston.

The auxiliary pre-combustion chamber of each cylinder, for indirect injection engines, can be used with the current shapes, such as spherical; however, a novel auxiliary pre-combustion chamber is proposed with a specific difference for the indirect injection four-stroke internal combustion engine, designed to run on vegetable oil and water as fuels, the main difference of which is that its internal shape is that of an ellipsoid intersected by the nozzle (of said pre-combustion chamber) that leads to the combustion chamber of the engine cylinder, this auxiliary chamber being located in the cylinder head.
The overpressure safety valve, located in the cylinder head of each cylinder of the four-stroke internal combustion engine designed to run using vegetable oil and water as fuels, will be used whenever it is necessary. For example, whenever the special coating applied to some basic elements of this engine, such as the piston or its head, the cylinder head or the area thereof leading to the combustion chamber, the intake valve, the exhaust valve, and the auxiliary pre-combustion chamber if applicable, would not resist an overpressure in the engine compression stroke due to its physical properties or characteristics. Reducing the pressure with this valve allows using these special coatings without problems. The overpressure safety valve will also be used in this type of engine when the overpressure in the engine compression stroke results in a considerable increase in the temperature of the intake air, and therefore an increase in the temperature of the combustion chamber and, when applicable, the auxiliary pre-combustion chamber, as well as an excessive temperature of the vegetable oil injected. In this case, the safety valve will prevent an overpressure that can cause an excessive temperature of the vegetable oil injected, thereby ensuring that the temperature of the vegetable oil injected is lower than its self-ignition point (the minimum temperature at which a product will spontaneously combust). This is necessary to mix it with the water that will be injected subsequently. The overpressure safety valve consists of a device that comprises a duct made in the cylinder head, connected on one of its ends with the combustion chamber and on the other with the engine exhaust duct. In the part nearer to the combustion chamber of this duct, which is part of the cylinder head, is placed a metal part with a shape defined by a small sphere and a small cylinder that intersect centrally, that is, the cylinder axis parallel to its generatrix lines intercepts the center of the sphere, wherein the diameter of the sphere is larger than that of the cylinder. This part rests at its spherical part on a seat located on the aforementioned duct, closing the duct at this part as the part is pushed on by a spring resting on the spherical surface o said metal part and its internal diameter is tangent (with some clearance) to the cylinder of the spherical-cylindrical part, the spring being pushed on at its other end by a tubular shaped screw, that is, hollow on the inside, this screw having a seat for the spring, a threading to allow screwing onto the cylinder head, and a nozzle or opening for connection to a hose or tube that communicates with the exhaust duct. With the overpressure safety valve conformed in this way, when the pressure in the combustion chamber exceeds a specified value the spherical-cylindrical part will rise from its seat, opening the communication duct between the combustion chamber and the exhaust duct, therefore allowing a flow of compressed air to pass through this duct from the combustion chamber to the exhaust duct, to maintain the necessary and required pressure in the combustion chamber and the auxiliary pre-combustion chamber when applicable.

The glow plug fitted in each cylinder of the four-stroke internal combustion engine running with vegetable oil and water as fuels, located at the cylinder head and in the auxiliary pre-combustion chamber, or combustion chamber if applicable, is of the same type fitted in Diesel engines, which as is known form part of the engine starting system, and is actuated by closing an electrical circuit when placing a start switch in the heating position, which when placed in a second position (start) will connect another electrical circuit that drives the starter motor. This glow plug has a simple operation, consisting of passing electrical current through a resistance in the plug in order to heat it, making it glow and give off large amounts of heat to increase the temperature of the auxiliary pre-combustion chamber and combustion chamber, as well as the air and vegetable oil contained in them. The electrical resistor of this plug, as intended for the present invention, shall be strong enough to raise the temperature of the air and vegetable oil contained in the auxiliary pre-combustion chamber and combustion chamber to approximately 210° C at the time of heating in order to start the engine. If necessary, more than one glow plug can be fitted in each cylinder of the engine of the present invention.

The starting system for the four-stroke internal combustion engine running on vegetable oil and water as fuels comprises several aspects that will be described in detail. When the start switch is placed in its first position (heating position), in addition to closing the electrical circuits that supply electrical power to the glow plugs and fuel heaters, a third electrical circuit is turned on after a certain time regulated by a timer in order to activate a fuel priming pump, disposed submerged in the vegetable oil tank, which communicates through some ducts with the accumulator manifold of the vegetable oil injection system, so that this manifold can have enough pressure so that the injectors (activated electrically), through the orifices or diffusers in their nozzles, can execute one or several simultaneous injections in the various auxiliary pre-combustion chambers and to a lesser extent the combustion chambers, or directly in the combustion chamber if there are no auxiliary pre-combustion chambers, in the heating time of the glow plug, without having had to actuate the starter motor and therefore without the distribution chain having driven the high-pressure injection pump. A fourth electrical circuit activated simultaneously in the same way as the third one will activate the injectors so that they simultaneously inject vegetable oil. The pin that closes and opens the injector nozzle will be lifted electromagnetically by this fourth circuit, so that the electromagnets of the vegetable oil injectors can be actuated by the aforementioned circuit and, when this circuit is disconnected, they can be actuated by another circuit controlled by an electronic unit. During the heating time a long injection of vegetable oil is preferable, quickly activated at the start of the heating, is preferable to several alternating injections. For this purpose, this fourth electrical circuit will be provided with an automatic switch that after a predefined time is disconnected from the electrical supply of the battery. This switch can be of any of the types available in the market, such as timers or clocks, that can comply with the necessary requirements. Thus, when the start switch is placed in its second position (start position), three of the four aforementioned circuits will be disconnected, and only the glow plug circuit will remain connected, while three other circuits are connected. One of these three circuits controls the synchronized and sequential injection of the vegetable oil injectors by means of an electronic unit. Another circuit controls the synchronized and sequential injection of the water injectors by another electronic unit. The third circuit starts the starter motor and thereby the distribution chain, the high pressure pumps (one for the vegetable oil and another for the water), the crankshaft, the flywheel and finally the pistons. In these circumstances, with a vegetable-oil rich volume in each of the auxiliary pre-combustion chambers, and if applicable in each of the combustion chambers, the intake air and the injected vegetable oil will be heated by the glow plugs to a temperature from 160°C to 210°C, and then heated again by the first compression (or first compressions) of the piston. The vegetable oil must be heated to at least a critical temperature (explained further below) between approximately 160°C and 210°C, depending on the type of vegetable oil used. Then, when water is injected in the auxiliary pre-combustion chamber and in the combustion chamber to a lesser extent, or when applicable only the combustion chamber (when there is no auxiliary chamber), in the compression stroke the entire mixture ignites, combusting spontaneously and thereby starting the engine. Once the engine of the present invention has started, the starter motor circuit and the glow plugs circuit will automatically be disconnected.

The special injectors for vegetable oil of the four-stroke internal combustion engine that runs with vegetable and water as fuels will preferably be (without discarding mechanically actuated injectors) of the type of injectors used in Diesel engines for electronic injection, such as the type of injectors that use electromagnetic valves and injection control chambers to be activated, or those activated by a piezoelectric element. For the engines according to this invention with similar power to current Diesel engines, these injectors will comprise some special features: openings having orifices or diffusers at the nozzle through which the vegetable oil leaves the injector with a diameter or diameters smaller than in current injectors; the injection pin that rests on the nozzle with a smaller cone angle than those of pins of current injectors; and the inner wall of the nozzle near the point of the injection pin with a more acute angle than in current injectors; in addition, the injection time of this injector, controlled by the electronic control unit, will be shorter than that used for current injectors, so that the volume of fuel (vegetable oil) in the injection in any revolutions regime of the engine of the present invention will have a ratio or approximate proportion of 50% to 99%, compared to the volume of the injection performed in the same circumstances by the injector of the Diesel injector, or compared to the sum of the total volume of the mixture (vegetable oil plus water).

The special injectors for water of the four-stroke internal combustion engine that uses vegetable and water as fuels will preferably be (without discarding mechanically actuated injectors) of the type of injectors used in electronic injection for Diesel engines, such as the type of injectors that use electromagnetic valves and injection control chambers to be activated, or those activated by a piezoelectric element. For the engines of this invention with similar power to current Diesel engines, these injectors will comprise some special features: openings having orifices or diffusers at the nozzle through which the water leaves the injector with a diameter or diameters smaller than in current injectors; the injection pin that rests on the nozzle with a smaller cone angle than those of pins of current injectors; and the inner wall of the nozzle near the point of the injection pin with a more acute angle than in current injectors. All of the aforementioned elements can also be smaller than those of the vegetable oil injectors; in addition, the injection time of this injector, controlled by the electronic control unit, will be shorter than that used for current injectors, so that the volume of fuel (water) in the injection in any revolutions regime of the engine of the present invention will have a ratio or approximate proportion of 1% to 50%, compared to the volume of injection performed in the same circumstances by the injector of the Diesel injector, or compared to the sum of the total volume of the mixture (vegetable oil plus water).

Optionally, a new type of injector is proposed for the engine of the present invention, both for injecting vegetable oil and water, mainly composed of: an inlet for high-pressure supply of fuel; electrical terminal; fuel return terminal; fuel inlet channel to injection nozzle; volumetric fuel cell; and fuel return channel; as well as having the aforementioned features for the injectors of the present invention, that is, that as compared to the injectors currently used in Diesel engines, the diameter of the orifices or diffusers of the nozzle are smaller, the cone angle of the point of the injection pin resting on the seat of the nozzle is also smaller, the inner wall of the nozzle next to the injection pin point has a more acute angle, and the injection time governed by the electronic control unit is also shorter, so that for the case of the vegetable oil injector, the volume of fuel (vegetable oil) in the injection made in any revolution regime of the engine of the present invention will be performed in a ratio or proportion of approximately 50% to 99%, compared to the volume of injection performed in these same circumstances by the injector of the Diesel engine, or compared to the sum of the total volume of the mixture (vegetable oil plus water), and for the water injector, the volume of fuel (water) in the injection performed in any revolution regime of the engine of the present invention will be performed in a ratio or proportion of approximately 1% to 50%, compared to the volume of the injection made in these same circumstances by the injector of the Diesel engine or compared to the sum of the total volume of the mixture (vegetable oil plus water). In addition to all this, the operation of the injector differs in some aspects from the electronic injectors currently available in the market. These differences mainly consist in that the pin of the injection nozzle forms a single piece with the control stem of the injector, or is joined to it by screws, this stem having some lips or lugs disposed perpendicular to the longitudinal direction of the stem such that they would form a cross when looking at them from the transverse section of the stem. A spring rests on these lips or lugs that is pressed on by a special tubular screw provided with joints that is screwed on both of its ends to the injector casing. This screw and joints are provided with gaps or orifices in order not to interrupt the fuel inlet channel to the nozzle, as well as the fuel return. The aforementioned spring pushes the pin against the nozzle seat, so that the orifice or orifices-diffusers of the nozzle are perfectly sealed. On the top part of the injector is disposed an electromagnet that is joined to the top part of the injector casing through anchorings, formed by a cylinder of soft iron or steel, which on its bottom face has a cylindrical centered recess and a coil whose turns are wound around said cylindrical metal part. Threaded or joined to the top part of the stem is a cylindrical part of soft iron or steel with a cylindrical centered recess made on its top face. This part is placed near to and opposite the electromagnet, separated from it a short distance by a small spring housed in the aforementioned recesses; thus, the said part integrally joined to the stem will be in the magnetic field of the electromagnet. The two springs present in the injector withstand the pressure exerted by the fuel (vegetable oil or water) in the volumetric cell against the stem of the nozzle pin, keeping the pin from rising from its seat and therefore preventing the injection of fuel. When an electric current is passed through the electromagnet coil, the metal part threaded or joined to the stem of the nozzle pin is attracted, lifting the pin from its seat in the nozzle and allowing fuel to pass, thereby producing an injection. The magnetic force exerted by the electromagnet plus the pressure exerted by the fuel in the volumetric cell on the stem is enough to overcome the resistance of the springs, making the pin of the injection nozzle pivot or oscillate, thereby achieving the intended operation of the injector.

The cylinders of the engine of the present invention can be made when casting the engine block or by incorporating cylinder sleeves in the engine block.

When the cylinders are cast together with the engine block, without using sleeves, for the four-stroke internal combustion engine that runs using vegetable oil and water as fuels, this will constitute a first example of embodiment of these cylinders, wherein the engine block will be made of stainless steel, with an alloy of iron, carbon, chromium or nickel, or an alloy of only iron, carbon and nickel.

In a second form of embodiment for the aforementioned cylinders the engine block can be made or cast with casting material and the cylinder will subsequently receive a nickel coating.

In a third form of embodiment for the cylinders the engine block can be made or cast with casting material and the cylinder will subsequently receive a ceramic coating or a vitreous or ceramic crystal enamel coating.

However, as regards the cylinders, the engine block can be made, for example, of any casting material or aluminum, subsequently coating its cylinders with any material that has been shown in the laboratory by trial and error to provide optimum results regarding resistance to friction, temperature, etc., these materials also allowing the chemical reactions between the vegetable oil and water that take place in the combustion chamber to help and not hinder combustion.

If sleeves are incorporated. The special cylinder sleeve for the four-stroke internal combustion engine that runs using vegetable oil and water as fuels, will constitute a first example of embodiment wherein the sleeve is made of stainless steel, with an alloy of iron, carbon, chromium or nickel, or an alloy of only iron, carbon and nickel.

In a second embodiment of this sleeve it can be made of steel with a nickel coating.

In a third embodiment, the cylinder sleeve can be made of steel with an internal ceramic coating or a vitreous or ceramic crystal enamel coating.

However, the special cylinder sleeve can be made, for example, of any casting material or aluminum, subsequently coating its cylinders with any material that trial and error in the laboratory has shown to provide optimum results regarding resistance to friction, temperature, etc., these material also allowing the chemical reactions between the vegetable oil and water that take place in the combustion chamber to help and not hinder combustion.

The special coating or manufacture with a special material of some essential elements that compose the four-stroke internal combustion engine that runs using vegetable oil and water as fuels, constitutes a first example of embodiment wherein the piston, the cylinder head, the intake valve, the exhaust valve, the intake duct, the exhaust duct and the auxiliary pre-combustion chamber, when applicable, are made of stainless steel, either of an alloy of steel, carbon, chromium and nickel, or an alloy of only iron, carbon and nickel.

The special coating or manufacture with special material of some essential elements of the engine of the present invention constitutes a second example of embodiment, wherein the piston, the bottom part of the cylinder head, the intake valve, the exhaust valve, the intake duct, the exhaust duct and the auxiliary pre-combustion chamber, when applicable, can be made of steel with a nickel coating.

The special coating or manufacture with special material of some essential elements of the engine of the present invention constitutes a third example of embodiment, wherein the piston or its head, the cylinder head, its bottom part or the area thereof that leads to the combustion chamber, the intake valve, the exhaust valve, the intake duct, the exhaust duct and the auxiliary pre-combustion chamber, when applicable, can be made of aluminum or steel with a special coating of several layers of polytetrafluoroethylene.

The special coating or manufacture with special material of some essential elements of the engine of the present invention constitutes a fourth example of embodiment, wherein the piston or its head, the cylinder head, its bottom part or the area thereof that leads to the combustion chamber, the intake valve, the exhaust valve, the intake duct, the exhaust duct and the auxiliary pre-combustion chamber, when applicable, can be made of steel with a ceramic coating or vitreous enamel or ceramic crystal enamel coating.

However, the special coating or manufacture with special material of some essential elements that make up the engine of the present invention, such as its piston or its head, the cylinder head, its bottom part or part that leads to the combustion chamber, the intake valve, the exhaust valve, the exhaust duct, and the auxiliary pre-combustion chamber when applicable, can be made, for example, of any casting material and coated with any material which has been shown by trial and error in the laboratory to provide optimum mechanical properties, resistance to temperature, etc., these materials also allowing the chemical reactions that take place between the vegetable oil and the water in the combustion chamber and auxiliary pre-combustion chamber when applicable to aid and not hinder combustion.

One of the very specific characteristics of this invention of a four-stroke internal combustion engine that runs using as fuels vegetable oil and water consists in that it comprises two independent fuel tanks, one for vegetable oil and one for water.

Another of the very specific characteristics of this invention of a four-stroke internal combustion engine that runs using as fuels vegetable oil and water consists in that it comprises two independent injection systems, one for vegetable oil and one for water.

The vegetable oil injection system of the engine of the present invention will be similar to those existing and known for Diesel engines, with some differences, essentially comprising: priming electrical pump submerged in the vegetable oil tank with a prefilter; high pressure pump driven by the distribution chain; high-pressure regulator; electronic control unit with connection strip for sensors and connection strip for actuators or activators; accumulator manifold (also known as injection ramp); pressure gauge; ducts for distributing the vegetable oil, which can be low-pressure suction, high-pressure supply, and return; vegetable oil filter; electrical wires and circuits for the gauges and actuators; special injectors for vegetable oil (defined above). The system can also include one or more fuel heater so that the vegetable oil enters the engine already heated to a specific temperature, approximately from 70°C to 80°C (necessary for starting the engine, and especially in cold-weather locations) and a radiator or fuel coolant for the fuel that returns to the tank. It is different from current injection systems for Diesel engines in that it uses the special injectors for vegetable oil, and in that the injection time controlled by the electronic control unit is shorter than that used by Diesel injectors, so that in this injection system the volume of fuel (vegetable oil) in the injection performed in any revolution regime of the engine of the present invention can be made in a ratio or proportion of approximately 50% to 99% compared to the volume of the injection in the same circumstances performed by the Diesel engine injector or compared to the total volume of the mixture (vegetable oil plus water).

Optionally, in some cases it is possible to eliminate the high-pressure pump, replacing its function by an electrical pump (or a high-pressure electrical pump) adjoining the priming pump, or even enabling the priming pump (controlled by the electronic control unit) to provide the additional pressure required in the accumulator manifold (or injection ramp) of the system in order to execute the various injections in the operation of the engine, as the injection of vegetable oil in the engine of the present invention takes place during the intake stroke of the engine, so that the pressure required to inject the vegetable oil is not too great.

The water injection system of the engine of the present invention will be similar to those existing and known for Diesel engines, with some differences, essentially comprising: water tank with a prefilter; high pressure pump (which can be optionally installed in the system, depending on whether or not the water supply in the system is performed by a high-pressure electrical pump) driven by the distribution chain; high-pressure regulator; electronic control unit with connection strip for sensors and connection strip for actuators or activators; accumulator manifold (or injection ramp); pressure gauge; ducts for distributing the water, which can be low-pressure suction, high-pressure supply, and return; electrical wires and circuits for the gauges and actuators; special injectors for water (defined above). The system can also include one or more fuel heater so that the vegetable oil enters the engine already heated (necessary in cold-weather locations) and a radiator or fuel coolant for the water that returns to the tank. It is different from current injection systems for Diesel engines in that it uses the special injectors for water, and in that the injection time controlled by the electronic control unit is shorter than that used by Diesel injectors, so that in this injection system the volume of fuel (water) in the injection performed in any revolution regime of the engine of the present invention can be made in a ratio or proportion of approximately 1% to 50% compared to the volume of the injection in the same circumstances performed by the Diesel engine injector or compared to the total volume of the mixture (vegetable oil plus water).

Injection advance. The four-stroke internal combustion engine of the present invention operates using vegetable oil ad water as fuel. As seen above, for its operation it requires and makes use of certain chemical reactions (electrolysis and hydrolysis) activated and resulting from the mixture of vegetable oil, water and air, in certain environmental conditions, such as the surface of the enclosure in which the mixture is contained and the surrounding temperature, these chemical reactions concluding with the combustion of the mixture. Therefore, the new engine proposed requires considering, in the same way as is done for gasoline engines by foreseeing the ignition advance or for Diesel engines by foreseeing the injection advance (the time when the spark from the spark plug is released in the gasoline engine, or when the oil is injected in Diesel engines, before the piston of the engine cylinder reaches top dead center, in the compression stroke). In our case, special attention must be given to the ignition of the mixture (air, vegetable oil and water), which in the invention of the present engine is intimately related to the injection advance, both the vegetable oil injection advance and the water injection advance. These advances consist of foreseeing and measuring the necessary time parameters at which the chemical reactions are obtained, as well as the time of propagation and inflammation of the total combustion mixture. Since the combustion of the entire mixture does not actually take place instantaneously but instead progresses gradually, although it advances very fast, there is a short delay. In addition, it is necessary to add the injection times (of vegetable oil and water) governed by the electronic control units that supply the advance for the vegetable oil injection at the corresponding time and the water injection at the corresponding time, so that the mixture will combust without delay, foreseeing that the entire expansion force of the combustion is applied to the head or base of the piston. These advances are performed according to the rotation speed of the engine, so that they will be greater the faster the engine of the invention is rotating.

Thus, according to this first embodiment of the present invention of a four-stroke internal combustion engine, with indirect injection, conceived for operation using as fuels vegetable oil and water, its operation can be defined specifically in that the injection advance consists of the vegetable oil injection takes place in a special auxiliary pre-combustion chamber and in the combustion chamber to a lesser extent, in the intake stroke (air intake in the cylinder and in the auxiliary pre-combustion chamber), when the piston head is almost at bottom dead center, but before reaching this point, and the water injection takes place in the aforementioned auxiliary pre-combustion chamber and in the combustion chamber to a lesser extent, in the compression stroke, before the piston head is at top dead center. The distance from the piston head to top dead center at the time of water injection depends on the water injection advance, and similarly the distance from the piston head to bottom dead center at the time of vegetable oil injection depends on the vegetable oil injection advance. These advances are greater the faster the engine rotation speed. All of this is regulated by the two electronic control units of the injection systems (one for vegetable oil and one for water), which with their sensors and probes, as well as their actuators or activators, will determine the ideal parameters at each time for the injection advances, both for vegetable oil and water.

Thus, according to this first embodiment of the present invention proposed, a new four-stroke internal combustion engine with indirect injection is provided meant for operation using vegetable oil and water as fuels, its operation being specifically defined by the configuration of some of its strokes, stages and times in which the fuel injections take place (vegetable oil and water). To better understand the operation of this first embodiment of the present engine, its different strokes are defined herein with their corresponding and specific characteristics (stages, injection times, etc.) as well as the different movements of the piston that originate its motion.

In the intake stroke, the exhaust valve is closed and the intake valve opens, allowing air to enter the cylinder and the auxiliary pre-combustion chamber while the piston moves from the top dead center to bottom dead center positions. The engine is defined in this stage in that the vegetable oil injection takes place in said intake stroke, in the special auxiliary pre-combustion chamber and in the combustion chamber to a lesser extent, when the piston head is almost in the bottom dead center, but before reaching this point.

In the compression stroke, the exhaust valve and intake valve will be closed, and while the piston moves from bottom dead center to top dead center, the air and vegetable oil deposited in the cylinder and in the auxiliary pre-combustion chamber are compressed and therefore heated, their temperature rising quickly so that the vegetable oil reaches a temperature between its 'critical temperature' (from 160°C to 210°C, depending on the type of vegetable oil used) and its 'self-ignition temperature' (minimum temperature at which a product spontaneously combusts), without reaching the latter. The engine is defined in this stage in that the water injection takes place in said compression stroke, in the special auxiliary pre-combustion chamber and in the combustion chamber to a lesser extent, when the piston head is almost at top dead center, but before reaching this point, and the overpressure safety valve can remain closed or be momentarily open if the pressure in the cylinder and the auxiliary pre-combustion chamber exceeds the specified pressure values.

In the combustion stroke, also known as the power or expansion stroke, the exhaust valve and intake valve will be closed. The engine is defined in this stage in that, when the air, vegetable oil and water are mixed in the previous compression stage in the specified percentages and required environmental and temperature conditions, the chemical reactions specified and defined previously (electrolysis and hydrolysis) take place, obtaining almost simultaneously the combustion of the mixture, and all of the expansive force due to the combustion gases concentrated in a minimal volume in the combustion chamber and auxiliary pre-combustion chamber is applied to the head or base of the piston when it is in top dead center, pushing it and moving it with great force to the bottom dead center point.

In the exhaust stroke the intake valve will be closed and the exhaust valve will be open. The piston will move in this stage from the bottom dead center to the top dead center point, in its path displacing the combustion gases and fumes to the exhaust valve, thereby making these gases exit through the exhaust duct and subsequently reach the exhaust pipe and the outside. As seen in this last stage, there are apparently no differences with respect to the exhaust stage of Diesel engines, and the new engine can only be characterized in this stage in a noteworthy way in that the exhaust gases, as they originate from alternative organic and ecological fuels (vegetable oil and water) are less polluting than the gases obtained from combustion of fossil fuels (gasoil or gasoline).

According to a second embodiment of the present invention, similar to the engine defined previously, for a new four-stroke internal combustion engine conceived for operating with vegetable oil and water as fuels, it is defined specifically in that the injection of the fuels, both vegetable oil and water, take place directly in the combustion chamber, without any auxiliary pre-combustion chamber existing. Thus, unlike in the first embodiment, the special injector for vegetable oil, the special injector for water, and the glow plug, will all be located in the cylinder head and placed in the combustion chamber, these being the only physical differences of this embodiment compared to the first embodiment of the engine of the present invention, as well as some minimal differences in operation, specifically for example regarding the time at which the vegetable oil is injected. It is mainly composed of: a lubrication system, a cooling system, specific electrical and combustion systems, an engine block, a cylinder head, a cylinder head gasket, an oil pan and for each cylinder comprises a piston, a pushrod, a crankshaft, a combustion chamber, an auxiliary pre-combustion chamber, an intake valve, an exhaust valve, an intake duct, an exhaust duct, a specific over-pressure safety valve, and a robust glow or heating plug located at the cylinder head and placed in the combustion chamber, and also comprises a specific startup system for starting the engine, a special vegetable oil injector located at the cylinder head and in the combustion chamber, a special water injector located at the cylinder head and in the combustion chamber, a special cylinder sleeve, special coating or manufacture with a special material of some basic elements of the engine, such as the piston, the cylinder head, the bottom part of the cylinder head or its area that leads to the combustion chamber, the intake valve, the exhaust valve, the intake duct and the exhaust duct, and also comprises two independent fuel tanks (one for vegetable oil and another for water), two independent injection systems (one for vegetable oil and another for water), and in its operation presents specific injection advances (one for vegetable oil and another for water). This engine is suitable for primarily comprising and including in its operation a method for dissociating hydrogen from water (electrolytic dissociation of the water molecule) and also including a specific reaction of water hydrolysis with the esters of the vegetable oil, these chemical reactions and thereby the entire procedure being linked with the operation of the engine proposed in this invention. The method is determined in that the dissociation of hydrogen from water (electrolytic dissociation) and the specific chemical reaction of water hydrolysis with the esters of the vegetable oil take place virtually simultaneously with combustion.

The combustion system used by the four-stroke internal combustion engine conceived for operating with vegetable oil and water as fuels, is similar to that used and defined in the first embodiment of this invention, except that in this second embodiment the special injectors for vegetable oil and water inject directly in the combustion chamber, without any auxiliary pre-combustion chamber existing.

The systems and elements used by this second example of embodiment of the four-stroke ice with direct injection, design to run using vegetable oil and water as fuels, such as the lubrication, electrical, cooling, start-up, vegetable oil injection and water injection systems, as well as the piston disclosed above, the overpressure safety valve, the glow plug or heating plug, the special water injector, are the same systems and elements defined above for the first embodiment of the engine of the present invention, and their operation is equivalent in both embodiments of the engine.

The different execution variants for the cylinders, the special cylinder sleeve, and the special coating or manufacture from a special material of certain essential elements such as the piston, the cylinder head, the intake valve, the exhaust valve, the intake duct, and the exhaust duct that make up the direct injection engine of this second embodiment are the same as those defined above for the first embodiment of this engine.

This second embodiment of the four-stroke internal combustion engine that runs using as fuels vegetable oil and water, also comprises as the first embodiment two independent fuel tanks, one for vegetable oil and one for water. It also comprises two independent injection systems, one for vegetable oil and one for water.

The injection advance in this second embodiment of the four-stroke internal combustion engine that runs using as fuels vegetable oil and water, is in part similar to what was described and defined above for the first embodiment of the engine of the present invention, with some differences. Its operation is specifically defined in that in the injection advance the vegetable oil injection is performed directly in the combustion chamber in the intake stroke (air intake in the cylinder), when the piston is practically initiating intake and its head is near the top dead center point, but moving away from it, and the water injection is performed in the combustion chamber in the compression stroke, before the piston head is at top dead center. The distance from the piston head to top dead center at the time of water injection depends on the water injection advance, and similarly the distance from the piston head to top dead center at the time of vegetable oil injection depends on the vegetable oil injection advance. These advances are greater the faster the engine rotation speed. All of this is regulated by the two electronic control units of the injection systems (one for vegetable oil and one for water), which with their sensors and probes, as well as their actuators or activators, will determine the ideal parameters at each time for the injection advances, both for vegetable oil and water.

Thus, according to this second embodiment of the present invention proposed, a new four-stroke internal combustion engine with direct injection is provided meant for operation using vegetable oil and water as fuels, its operation being specifically defined by the configuration of some of its strokes, stages and times in which the fuel injections take place (vegetable oil and water). To better understand the operation of this second embodiment of the present engine, its different strokes are defined herein with their corresponding and specific characteristics (stages, injection times, etc.) as well as the different movements of the piston that originate its motion.

In the intake stroke, the exhaust valve is closed and the intake valve opens, allowing air to enter the cylinder or the combustion chamber while the piston moves from the top dead center to bottom dead center positions. The engine is defined in this stage in that the vegetable oil injection takes place in said intake stroke, in the combustion chamber, when the piston head is almost in the top dead center, initiating its intake movement and instants after passing said top dead center position.

In the compression stroke, the exhaust valve and intake valve will be closed, and while the piston moves from bottom dead center to top dead center, the air and vegetable oil deposited in the cylinder or in the combustion chamber are compressed and therefore heated, their temperature rising quickly so that the vegetable oil reaches a temperature between its critical temperature and its self-ignition temperature, without reaching the latter. The engine is defined in this stage in that the water injection takes place in said compression stroke, in the combustion chamber, when the piston head is almost at top dead center, but before reaching this point, and the overpressure safety valve can remain closed or be momentarily open if the pressure in the cylinder exceeds the specified pressure values.

In the combustion stroke, also known as the power or expansion stroke, the exhaust valve and intake valve will be closed. The engine is defined in this stage in that, when the air, vegetable oil and water are mixed in the previous compression stage in the specified percentages and required environmental and temperature conditions, the chemical reactions specified and defined previously (electrolysis and hydrolysis) take place, obtaining almost simultaneously the combustion of the mixture, and all of the expansive force due to the combustion gases concentrated in a minimal volume in the combustion chamber is applied to the head or base of the piston when it is in top dead center, pushing it and moving it with great force to the bottom dead center point.

In the exhaust stroke the intake valve will be closed and the exhaust valve will be open. The piston will move in this stage from the bottom dead center to the top dead center point, in its path displacing the combustion gases and fumes to the exhaust valve, thereby making these gases exit through the exhaust duct and subsequently reach the exhaust pipe and the outside. As seen in this last stage, there are apparently no differences with respect to the exhaust stage of Diesel engines, and the new engine can only be characterized in this stage in a noteworthy way in that the exhaust gases, as they originate from alternative organic and ecological fuels (vegetable oil and water) are less polluting than the gases obtained from combustion of fossil fuels (gasoil or gasoline).

The aforementioned embodiments of engines may incorporate a speed limiter regulator to keep them from exceeding a predefined maximum speed, in order to preserve the mechanical strength of their components.

Thus, the engine of the present invention (for the two embodiments defined) of a four-stroke internal combustion engine that runs using as fuels vegetable oil and water, with direct or indirect injection, provide the user and society in general with substantial economic and environmental advantages compared to the engines currently in use. In this way the present invention is constituted in its different embodiments, components and comprising elements, without its embodiments or their component elements constituting a limitation of its scope.

As specified above, a second object of the present invention relates to a method related for dissociating hydrogen from water (electrolytic dissociation of the water molecule), understanding this dissociation of hydrogen as a main or primary transformation or chemical reaction that is part of and in chain with a specific chemical reaction of water hydrolysis with the vegetable oil esters, the aforementioned chemical reactions taking place practically simultaneously, these chemical reactions and thus the entire method being linked to the operation of the engine proposed in the present invention. This method is characterized in that said dissociation of hydrogen from water (electrolytic dissociation) and the specific chemical reaction of water hydrolysis with the vegetable oil esters take place practically simultaneously with the combustion.

This method can be used whenever the optimum and necessary conditions are present, and naturally in the auxiliary pre-combustion chambers and combustion chambers of the different embodiments of the present invention.

The procedure we are referring to is in fact a transformation or chemical reaction between two components (not counting air), namely vegetable oil and water (which we know are not soluble in each other), and in any chemical reaction the materials in contact with the reagents can also interact or react in the reaction, either in a positive or negative way for our purposes. It is therefore necessary on one hand to obtain by trial and error the most appropriate materials for manufacturing the auxiliary pre-combustion chamber and the combustion chamber (where said chemical reaction will take place in the engine), as well as all the engine elements that are adjacent or in contact with these chambers. In addition, it is necessary to know and specify for practical use certain specific properties of the components that will form part of the reaction (vegetable oil and water), as well as the detailed process to follow where the aforementioned chemical reactions will take place in the engine (for both direct and indirect injection engines). Similarly, it is necessary to determine the volumes of injected fuel (for vegetable oil and water, in the optimum proportions) and lastly, determine the basic steps followed by these chemical reactions in the engine of the present invention. This will allow obtaining the expected result, that is, as the primary objective the dissociation of the hydrogen from water (electrolytic dissociation) and include a specific chemical reaction of water hydrolysis with the vegetable oil esters. The object is that these reactions take place almost simultaneously to combustion. Therefore, this method comprises the following stages:
a) Determining by trial and error the most appropriate materials for manufacturing the auxiliary pre-combustion chamber when applicable and the combustion chamber (the places where said chemical reaction will take place), as well as all the engine elements that are adjacent or in contact with these chambers. These chambers and engine elements adjacent to them can for example be made of the following materials:
   stainless steel, either with an alloy of iron, carbon, chromium and nickel, or an alloy of only iron, carbon and nickel.
   steel with a nickel coating.
   aluminum or steel with a special coating of several layers of polytetrafluoroethylene.
   steel with a ceramic coating or a vitreous or ceramic crystal enamel coating.
   any other material that has been shown by trial and error in the laboratory to provide positive results for the desired reaction.
   These materials can be used indistinctly in the various aforementioned parts of the engine, and it is not necessary to use only materials of one type.
b) Determining the specific properties of the components that will form part of the reaction (vegetable oil and water), such as the different temperatures reached by the components and reaction products needed for executing and understanding the method, such as:
   the critical temperatures of the different vegetable oils that can be used, beyond which the heated vegetable oils will start to emit fumes and break down. The critical temperature of the vegetable oil must be known because above this temperature, when water or steam is sprayed on the vegetable oil in an appropriate environment (auxiliary pre-combustion chamber of combustion chamber of the engine of the present invention), the desired main or primary reaction will take place, that is, the dissociation of hydrogen from water, understanding this dissociation as a main or primary transformation or chemical reaction that is included and in chain with a specific chemical of water hydrolysis with the vegetable oil esters, so that the dissociation of hydrogen from water and the chemical reaction of water hydrolysis with the vegetable oil esters take place practically simultaneously with combustion. These critical temperatures are approximately the following for the various vegetable oils:
   * for olive oil, 210°C.
   * for sunflower and soybean oil, 170°C.
   * for linseed and corn oil, 160° C.
   The self-ignition temperature (the minimum temperature at which a product will spontaneously combust) for vegetable oil will be approximately from 528°C to 620°C depending on each oil.
   Since water molecules are composed of H2O, that is, two atoms of hydrogen and one of oxygen, and water is a primary component of the reaction, when hydrogen is dissociated it is also of interest to know:
   The self-ignition temperature of hydrogen, which is about 580°C.
   As water hydrolysis with the vegetable oil esters also forms part of the reaction, and as we know two compounds are formed by it, namely carboxylic acid and alcohol, it is also of interest to know:
   The self-ignition temperature of carboxylic acid, which is about 425°C.
   The self-ignition temperature of alcohol, which depending on the type of alcohol is approximately from 378°C to 460°C.
c) The determination and detailed description of the process to follow, in the places where said chemical reaction will take place in the internal combustion engine disclosed. This can be:
   In the auxiliary pre-combustion chambers, when the engine of the present invention is provided with them, and the fuel injection is performed in said auxiliary pre-combustion chambers. This process will take place with the engine operation when the vegetable oil injection takes place in a special auxiliary pre-combustion chamber and in the combustion chamber to a lesser extent, in the intake stroke (air intake in the cylinder and in the auxiliary pre-combustion chamber), when the piston head is almost at bottom dead center, but before reaching this point, and then the water injection takes place in the aforementioned auxiliary pre-combustion chamber and in the combustion chamber to a lesser extent, in the compression stroke (compression of the intake air and injected vegetable oil), before the piston head is at top dead center. The distance from the piston head to top dead center at the time of water injection depends on the water injection advance, and similarly the distance from the piston head to bottom dead center at the time of vegetable oil injection depends on the vegetable oil injection advance. These advances will be greater the faster the engine rotation speed. When the engine starts (glow plug heating the auxiliary pre-combustion chamber, combustion chamber, air and vegetable oil contained in them and by the action of the starter motor) the auxiliary pre-combustion chamber and combustion chamber will be warm in the successive combustion strokes; when the vegetable air is injected in the intake stroke (air intake) and when the piston is nearly at dead bottom center, the vegetable oil is injected, acquiring the temperature of the auxiliary pre-combustion chamber, with the temperature of the vegetable oil increasing in the compression stroke (compression of intake air and injected vegetable oil) and before the water is injected, that is, before the piston is at top dead center. The temperature reached by the vegetable oil used in these circumstances is at least its critical temperature, and at most any temperature under its self-ignition temperature. Then, when the piston is in the compression stroke, at a specific position near top dead center but before reaching this position, the water is injected in the auxiliary pre-combustion chamber and to a lesser extent in the combustion chamber. When water or steam is sprayed on the vegetable oil, which as stated above will be at a temperature between its critical temperature and the self-ignition temperature (without reaching the latter), the desired main or primary reaction will take place, that is, the dissociation of hydrogen from water of breakup of the water molecule, understanding this dissociation as a main or primary transformation or chemical reaction that is included and in chain with a specific chemical of water hydrolysis with the vegetable oil esters, so that the dissociation of hydrogen from water and the chemical reaction of water hydrolysis with the vegetable oil esters take place practically simultaneously with combustion.
   In the combustion chambers or cylinders, when the engine of the present invention does not have auxiliary pre-combustion chamber and the fuel injection is performed directly in the combustion chamber or cylinder of the engine. This process will take place with the operation of the engine, when the vegetable oil injection is performed directly in the combustion chamber or cylinder in the intake stroke (air intake in the cylinder), when the piston is practically initiating intake and its head is near the top dead center point, but moving away from it, so that then the water injection is performed in the combustion chamber or cylinder in the compression stroke (compression of intake air and injected vegetable oil), before the piston head is at top dead center. The distance from the piston head to top dead center at the time of water injection depends on the water injection advance, and similarly the distance from the piston head to top dead center at the time of vegetable oil injection depends on the vegetable oil injection advance. These advances will be greater the faster the engine rotation speed. When the engine starts (glow plug heating the combustion chamber, air and vegetable oil contained in it and by the action of the starter motor) the combustion chamber will be warm in the successive combustion strokes; when the vegetable air is injected in the intake stroke directly into the combustion chamber or cylinder with the piston practically initiating intake at top dead center, the vegetable oil injected will acquire the temperature of the combustion chamber, the temperature of the vegetable oil increasing in the compression stroke and before the water is injected, that is, before the piston is at top dead center. The temperature reached by the vegetable oil used in these circumstances is at least its critical temperature, and at most any temperature under its self-ignition temperature. Then, when the piston is in the compression stroke, at a specific position before reaching top dead center, the water is injected in the combustion chamber and cylinder. When water or steam is sprayed on the vegetable oil, which as stated above will be at a temperature between its critical temperature and the self-ignition temperature (without reaching the latter), the desired main or primary reaction will take place, that is, the dissociation of hydrogen from water of breakup of the water molecule, understanding this dissociation as a main or primary transformation or chemical reaction that is included and in chain with a specific chemical of water hydrolysis with the vegetable oil esters, so that the dissociation of hydrogen from water and the chemical reaction of water hydrolysis with the vegetable oil esters take place practically simultaneously with combustion.
d) Determination of the volumes of fuels to inject (vegetable oil and water). In both of the cases described above (engines with auxiliary pre-combustion chambers or without them) the volume of vegetable oil injected in the auxiliary pre-combustion chamber or combustion chamber, as applicable in each case, will be the injection performed in any revolution regime of the engine of the present invention and will be made in a ratio or proportion of approximately 50% to 99% compared to the volume of the injection in the same circumstances performed by the Diesel engine injector or compared to the total volume of the mixture (vegetable oil plus water). The volume of water injected in the auxiliary pre-combustion chamber or combustion chamber, as applicable in each case, will be the injection performed in any revolution regime of the engine of the present invention and will be made in a ratio or proportion of approximately 1% to 50% compared to the volume of the injection in the same circumstances performed by the Diesel engine injector or compared to the total volume of the mixture (vegetable oil plus water). Thus, within the ranges specified above, the most appropriate percentages of vegetable oil and water can be used in each specific case of the engine of the present invention, according to the technical characteristics used to manufacture it. For example, it is possible to have an engine that uses for combustion a mixture with 80% vegetable oil and 20% water, or any other complementary percentages according to the specified ranges.
e) Determination and detailed description of the basic steps of the aforementioned chemical reactions in the engine of the present invention, with or without auxiliary pre-combustion chambers. As is known, vegetable oils, or triglycerides, are organic compounds consisting of esters formed by three molecules of unsaturated fatty acids (oleic acid) and one molecule of alcohol (glycerin). It can therefore be said that an ester is a compound formed by the combination of a fatty acid and glycerin. In view of this, the basic steps of the aforementioned chemical reactions will be determined and described as follows. When the vegetable oil is heated by the means described above, this is, by the glow plugs, the compression of the air and the vegetable oil (by the piston) contained or introduced (air and vegetable oil) in an auxiliary pre-combustion chamber or combustion chamber (made of or coated with the aforementioned materials) of the engine of the present invention, reaching their critical temperature or higher temperature (without reaching their self-ignition temperature), the vegetable oil breaks down, releasing its ester chains. In these circumstances, when water or steam is sprayed on the vegetable oil, the oil esters (oil molecules) will reach with water (water molecules, H2O), dissociating it (electrolytic dissociation of the water molecule) or breaking up said molecule into a hydrogen ion or proton H<+>, positively charged, which will be dissociated or free of the oxygen atom, breaking its bond with the oxygen atom, and into hydroxide ions OH<->, negatively charged, so that the fragmented water molecules will reach with the esters of the vegetable oil, thus also including in this process a chemical hydrolysis reaction of water with the vegetable oil esters, so that the ester molecules break up into two parts, one of which reacts with the protons H<+> (hydrogen ions) of the dissociated water molecule to form carboxylic acid, while the other reacts with the hydroxide ions OH<-> to form alcohol, these reactions taking place practically simultaneously, and being characterized in that he dissociated of hydrogen from water (electrolytic dissociation) as well as the chemical hydrolysis reaction of the water with the esters of the vegetable oil take place practically simultaneously to the combustion. Therefore, the final reaction occurring can be described as a specific type of saponification reaction with the final result of combustion of the mixture.

It is necessary to add to the temperature of the vegetable oil at which the chemical reaction takes place (between its critical temperature and self-ignition temperature) the heat given off by the breaking of the bonds between the hydrogen and oxygen atoms of the water molecule, as well as the heat given off by the aforementioned hydrolysis reaction, so that the temperature in this stage of the reaction will reach a value above the self-ignition temperature of hydrogen, of vegetable oil and when applicable of the carboxylic acids and alcohols broken down, resulting in a spontaneous combustion of the entire mixture. This combustion will be used to run the engine of the present invention.

To better understand the object of the present invention, several practical and preferred embodiments thereof are described below, with reference to their component elements and the materials used to manufacture some of their essential elements. All of this is made with reference to schematic drawings appended to this specification for purposes of illustration only, in which identical references have been used for equivalent parts in the different figures, wherein:

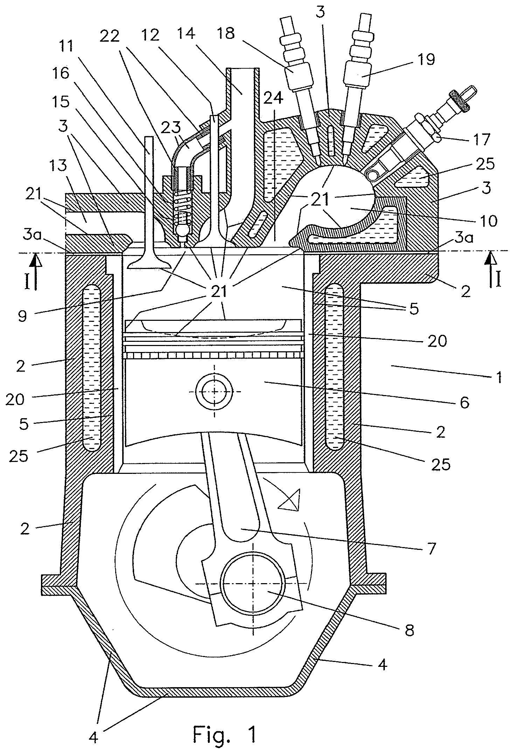

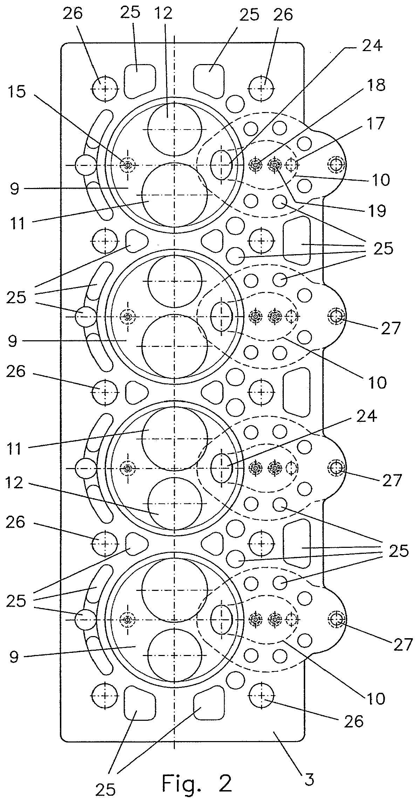

Figure 1 shows a first form of embodiment of the four-stroke internal combustion engine of the present invention that runs using vegetable oil ad water as fuel with indirect injection and provided with an auxiliary pre-combustion chamber. It is a schematic cross-sectional view along one of the engine cylinders, relative to the situation in which some essential engine components are located, such as the intake and exhaust valves, the injectors and the glow or heating plugs, which have been placed as shown in the drawing for the sake of understanding the engine and viewing all its essential components in a first view. Of course, in practice these elements may be placed in different positions of the cylinder head and distributed evenly throughout the auxiliary pre-combustion chamber and combustion chamber, such as in figure 2.
Figure 2 is a view of the cylinder head of figure 1 with the essential elements 8such as the intake and exhaust valves, injectors and glow or heating plug) located in it, showing its bottom part that reaches the head gasket, as would be seen along the I-I line of figure 1. This figure is represented with a smaller scale factor than used in figure 1.

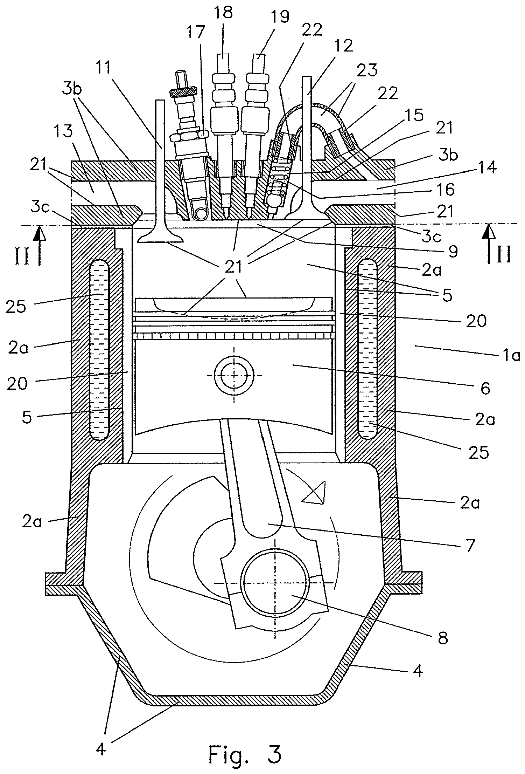

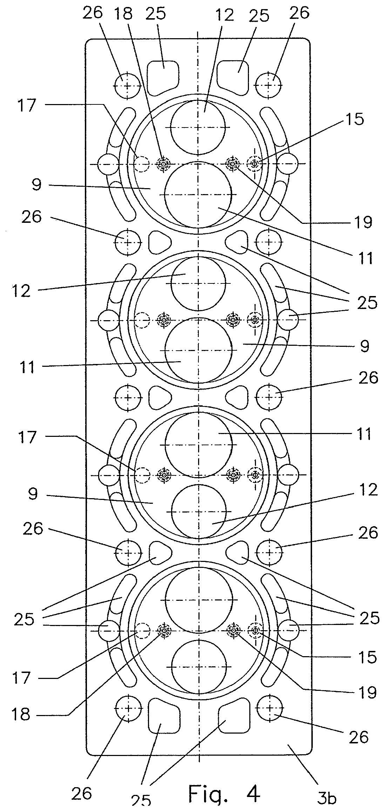

Figure 3 shows a second form of embodiment of the four-stroke internal combustion engine of the present invention that runs using vegetable oil ad water as fuel with direct injection in the cylinder or combustion chamber. It is a schematic cross-sectional view along one of the engine cylinders, relative to the situation in which some essential engine components are located, such as the intake and exhaust valves, the injectors and the glow or heating plugs, which have been placed as shown in the drawing for the sake of understanding the engine and viewing all its essential components in a first view. Of course, in practice these elements may be placed in different positions of the cylinder head and distributed evenly throughout the combustion chamber, such as in figure 4.
Figure 4 is a view of the cylinder head of figure 3 with the essential elements 8such as the intake and exhaust valves, injectors and glow or heating plug) located in it, showing its bottom part that reaches the head gasket, as would be seen along the II-II line of figure 3. This figure is represented with a smaller scale factor than used in figure 3.

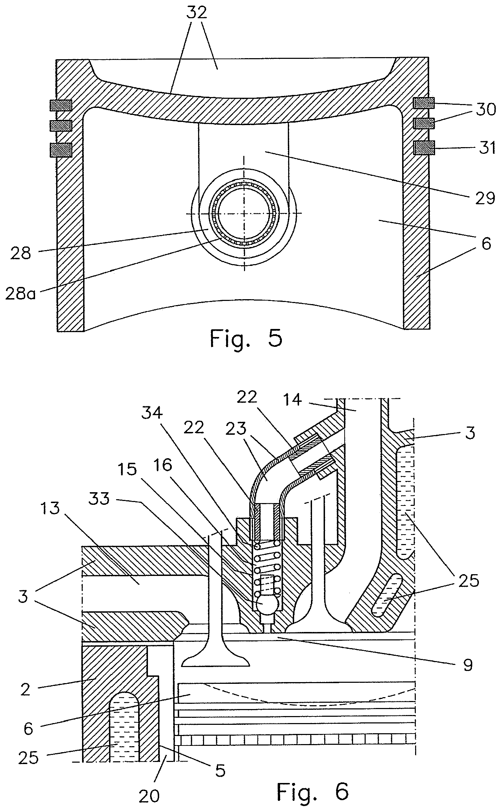

Figure 5 shows a novel embodiment of a piston that can be used in the engines represented in figures 1 and 3, in a schematic cross-sectional view of the piston shown with a greater scale factor than in figures 1 and 3.
Figure 6 is an expanded cross-sectional schematic representation of the overpressure safety valve and the nearby areas, which can be seen in figures 1 and 3.

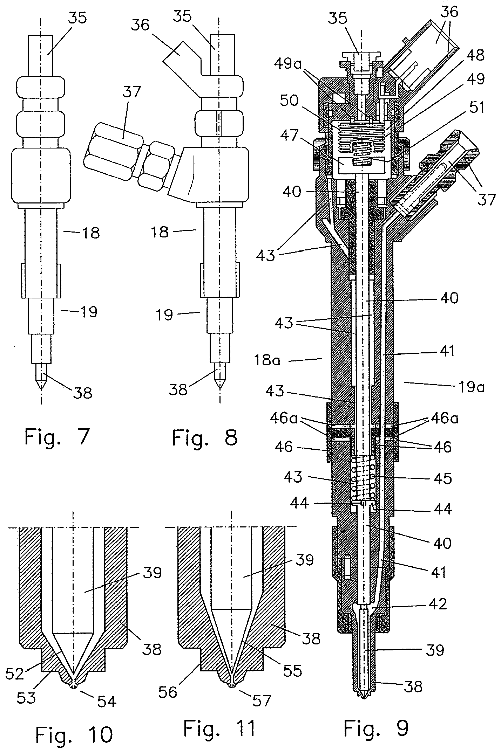

Figures 7 and 8 are schematic views expanded with respect to figures 1 and 3, which respectively show a front elevation view and a side elevation view of the special injectors for vegetable oil and the special injectors for water that form part of the engines represented in figures 1 and 3.
Figure 9 shows schematic longitudinal section view of an injector with a larger scale factor than in figures 1 and 3, showing a novel embodiment for the special injectors for vegetable oil and for water that can form part of the engines represented in figures 1 and 3.
Figures 10 and 11 show expanded longitudinal cross-sectional and schematic views of the ends of the nozzles and points of the injection pins, which respectively show in detail a nozzle of the special injector for vegetable oil and another nozzle of the special injector for water, corresponding to the injectors represented in figures 7, 8 and 9.

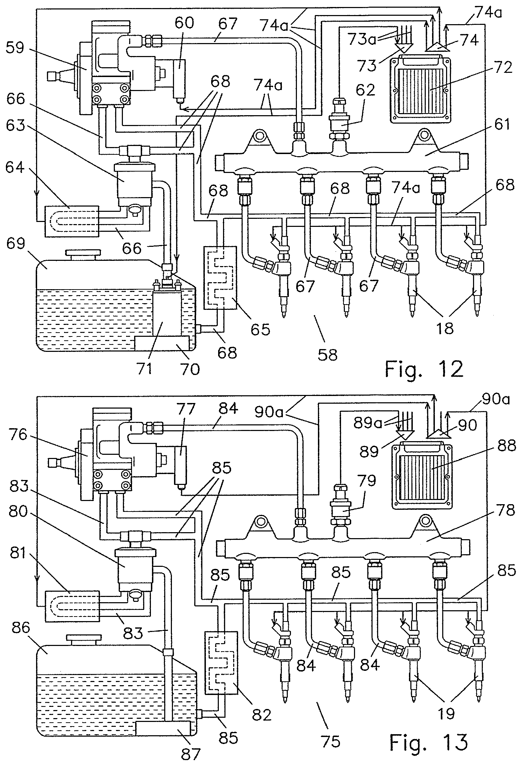

Figure 12 shows a schematic representation of the injection system for injecting vegetable oil that will form part of the engines represented in figures 1 and 3.
Figure 13 shows a schematic representation of the injection system for injecting water that will form part of the engines represented in figures 1 and 3.

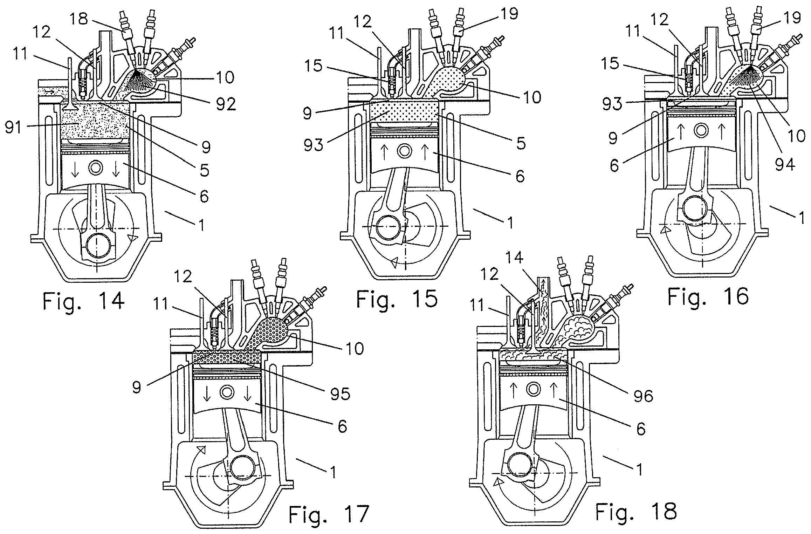

Figures 14, 15, 16, 17 and 18 are schematic transverse cross-sectional views of the engine of figure 1, showing the different movements of the piston in the different strokes and stages of the engine. Thus, figure 14 shows the intake stroke, figures 15 and 16 show the compression stroke, figure 17 shows the combustion and power stroke and figure 18 shows the exhaust stroke. These figures have been drawn with a smaller scale factor than in figure 1.

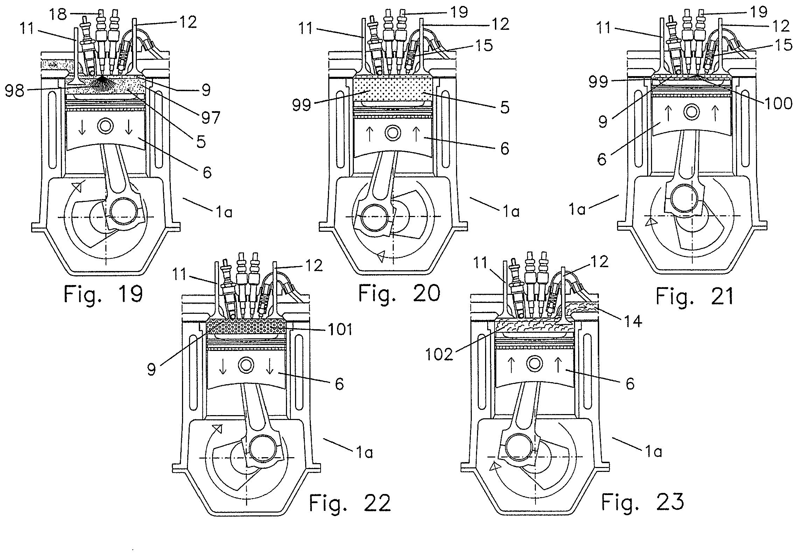

Figures 19, 20, 21, 22 and 23 are schematic transverse cross-sectional views of the engine of figure 3, showing the different movements of the piston in the different strokes and stages of the engine. Thus, figure 19 shows the intake stroke, figures 20 and 21 show the compression stroke, figure 22 shows the combustion and power stroke and figure 23 shows the exhaust stroke. These figures have been drawn with a smaller scale factor than in figure 3.

As shown in figure 1, the internal combustion engine (1) that runs on alternative fuels object of the present invention relates according to a first embodiment to a new four-stroke internal combustion engine (1) with indirect injection into an auxiliary pre-combustion chamber (10), designed to work using as fuels vegetable oil and water. It is mainly composed of: a lubrication system, a cooling system with water sleeves (25), specific electrical and combustion systems, an engine block (2), a cylinder head (3), a cylinder head gasket (3a), an oil pan (4), and for each cylinder (5) comprises: a piston (6), a connecting rod (7), a crankshaft (8), a combustion chamber (9), an auxiliary pre-combustion chamber (10) that is connected with the combustion chamber (9) by the nozzle (24), an intake valve (11), an exhaust valve (12), an intake duct (13), an exhaust duct (14), a specific over-pressure safety valve (15), a duct (16) and tubular screws (22) and a hose (23) for the safety valve (15), and a robust glow or heating plug (17) located at the cylinder head (3) and in the auxiliary pre-combustion chamber (10); and further comprises a special starting system for starting the engine, a special vegetable oil injector (18) located at the cylinder head (3) and in the auxiliary pre-combustion chamber (10), a special water injector (19) located at the cylinder head (3) and in the auxiliary pre-combustion chamber (10), a special cylinder sleeve (20), a special coating or a coating made of a special material (21) for some basic elements of the engine (1), such as the piston (6), the cylinder head (3), its base or its area that leads to the combustion chamber (9), the intake valve (11), the exhaust valve (12), the intake duct (13), the exhaust duct (14), and the auxiliary pre-combustion chamber (10) and its nozzle (24), and further comprises two independent fuel tanks (one for vegetable oil and another for water), two independent injection systems (one for vegetable oil and another for water), and in its operation presents specific injection advances (one for vegetable oil and another for water). This engine (1) is able, primordially in its operation, to comprise and encompass a method for dissociating hydrogen from water (electrolytic dissociation of hydrogen from water), thereby breaking the bonds of the water molecule and allowing the dissociation or breakup of this molecule into a positively charged hydrogen ion or proton H<+>, dissociated or free from the oxygen atom, and a negatively charged hydroxide ion OH<->; this method also includes a specific chemical reaction of water hydrolysis with the esters of the vegetable oil, so that the ester molecules are dissociated into two fragments, one of which reacts with the protons H<+> (hydrogen ions) of the dissociated water molecules to form carboxylic acid, and the other with the hydroxide ions OH<-> to form alcohol, these chemical reactions taking place virtually simultaneously, with these chemical reactions and therefore the entire process being linked to the operation of the engine (1) disclosed in the present invention. This method is characterized in that said dissociation of hydrogen from water (electrolytic dissociation) and the specific chemical reaction of water hydrolysis with the vegetable oil esters take place practically simultaneously with the combustion.

As stated above, figure 2 shows a view of the cylinder head (3) of the engine (1) of this first embodiment shown in figure 1, where can be seen different gaps representing the water chambers or sleeves (25) for cooling the cylinder head (3), some orifices (26) and (27) though which pass the studs of the engine block (2) in order to bolt the cylinder head (3) to the engine block (2). It also shows a practical example (not limiting other possible ones) of a possible situation in the cylinder head (3) of the different elements positioned in it, such as the intake valve (11), the exhaust valve (12), the overpressure safety valve (15), the glow or heating plug (17), the special vegetable oil injector (18), the special water injector (19), and an orifice or nozzle (24) of the auxiliary pre-combustion chamber (10) that is connected with the cylinder or combustion chamber (9) of the engine (1).

Figure 3 shows, according to a second embodiment (1a) of the present invention, a novel four-stroke internal combustion engine conceived for operating with vegetable oil and water as fuels, defined specifically in that the injection of the fuels, both vegetable oil and water, take place directly in the combustion chamber (9), without any auxiliary pre-combustion chamber existing. Thus, unlike in the first embodiment, the special injector for vegetable oil (18), the special injector for water (19), and the glow plug (17), will all be located in the cylinder head (3b) and placed in the combustion chamber (9), these being the only physical differences of this embodiment compared to the first embodiment of the engine of the present invention, as well as some minimal differences in operation, specifically for example regarding the time at which the vegetable oil is injected. It is mainly composed of: a lubrication system, a cooling system with water sleeves (25), specific electrical and combustion systems, an engine block (2a), a cylinder head (3b), a cylinder head gasket (3c), an oil pan (4), and for each cylinder (5) comprises: a piston (6), a connecting rod (7), a crankshaft (8), a combustion chamber (9), an intake valve (11), an exhaust valve (12), an intake duct (13), an exhaust duct (14), a specific over-pressure safety valve (15), a duct (16) and tubular screws (22) and a hose (23) for the safety valve (15), and a robust glow or heating plug (17) located at the cylinder head (3b) and in the combustion chamber (9); and further comprises a special starting system for starting the engine, a special vegetable oil injector (18) located at the cylinder head (3b) and in the combustion chamber (9), a special water injector (19) located at the cylinder head (3b) and in the combustion chamber (9), a special cylinder sleeve (20), a special coating or a coating made of a special material (21) for some basic elements of this second embodiment the engine (1a), such as the piston (6), the cylinder head (3b), its base or its area that leads to the combustion chamber (9), the intake valve (11), the exhaust valve (12), the intake duct (13), the exhaust duct (14), and the auxiliary pre-combustion chamber (10) and its nozzle (24), and further comprises two independent fuel tanks (one for vegetable oil and another for water), two independent injection systems (one for vegetable oil and another for water), and in its operation presents specific injection advances (one for vegetable oil and another for water). This engine is suitable for primarily including in its operation a method for dissociating hydrogen from water (electrolytic dissociation of the water molecule) and also including a specific chemical reaction of water hydrolysis with the esters of the vegetable oil, these chemical reactions and thereby the entire procedure being linked with the operation of the engine proposed in this invention. The method is determined in that the dissociation of hydrogen from water (electrolytic dissociation) and the specific chemical reaction of water hydrolysis with the esters of the vegetable oil take place virtually simultaneously with combustion.

Figure 4 shows a view of the cylinder head (3b) of the engine (3) of a second embodiment (1a) of this invention, represented in figure 3, where can be seen different gaps representing the water chambers or sleeves (25) for cooling the cylinder head (3b), some orifices (26) though which pass the studs of the engine block (2a) in order to bolt the cylinder head (3b) to the engine block (2a); it also shows a practical example (not limiting other possible ones) of a possible situation in the cylinder head (3b) of the different elements positioned in it, such as the intake valve (11), the exhaust valve (12), the overpressure safety valve (15), the glow or heating plug (17), the special vegetable oil injector (18) and the special water injector (19).

Figure 5 shows a new embodiment of a piston (6) that can be incorporated in the different embodiments of the engines (1) and (1a) shown in figures 1 and 3, this piston (6) comprising some supports (28) opposite each other and joined to the wall of the piston (6) and to ribs (29) joined to the head or base of the piston (6), on which supports are placed some pads (28a) on which rests the pin of the piston (6). It can have two or more compression segments (30) and one or more greasing segments (31), mainly different from current pistons in its shape, as it has a notch (32) with a shape defined by the intersection of a concave spherical cap and an inverted truncated cone, with rounded intersections, this notch (32) being centered at the base or head of the piston (6), and having a circular diameter of the upper base of the cone that is smaller than the diameter of the piston (6).

Figure 6, as stated above, is an expanded cross-sectional schematic representation of the overpressure safety valve (15) and the nearby areas, which can be seen in figures 1 and 3, representing the two forms of embodiment of the engine (1) with indirect injection and (1a) with direct injection. Said valve (15) can be placed in the cylinder head (3) of the indirect injection engine (1) or in the cylinder head (3b) of the direct injection engine (1a), and positioned in the combustion chamber (9) of each cylinder (5) of the said engines (1) and (1a). Thus, the overpressure safety valve (15) is a device that comprises a duct (16) made in the cylinder head (3) of the engine (1) or in the cylinder head (3b) of the engine (1a), connected on one of its ends with the combustion chamber (9) and on the other with the exhaust duct (14) of the engine (1) or the engine (1a) as applicable. In the part nearer to the combustion chamber (9) of this duct (16), which is part of the cylinder head (3) or (3b), is placed a metal part (33) with a shape defined by a small sphere and a small cylinder that intersect centrally, that is, the cylinder axis parallel to its generatrix lines intercepts the center of the sphere, wherein the diameter of the sphere is larger than that of the cylinder. This part (33) rests at its spherical part on a seat located on the aforementioned duct (16), closing the duct (16) at this point as the part (33) is pushed on by a spring (34) resting on the spherical surface of said metal part (33) and its internal diameter is tangent (with some clearance) to the cylinder of the spherical-cylindrical part (33), the spring (34) being pushed on at its other end by a tubular shaped screw (22), that is, hollow on the inside, this screw (22) having a seat for the spring (34), a threading to allow screwing onto the cylinder head (3) of he engine (1) or the cylinder head (3b) of the engine (1a), as applicable, and a nozzle or opening for connection to a hose (23) or tube that communicates with the exhaust duct (14). With the overpressure safety valve (15) conformed in this way, when the pressure in the combustion chamber (9) exceeds a specified value the spherical-cylindrical part (33) will rise from its seat, opening the communication duct (16) between the combustion chamber (9) and the exhaust duct (14), therefore allowing a flow of compressed air to pass through this duct (14) from the combustion chamber (9) to the exhaust duct (14), to maintain the necessary and required pressure in the combustion chamber(9) and the auxiliary pre-combustion chamber (10) when applicable.

As regards figures 7, 8 and 10, views are provided of the special injector for vegetable oil (18) as well as a detailed cross-section of its nozzle (38), that can be used in the four-stroke injection engines (1) and (1a) that run on vegetable oil and water, whether these have direct or injection (1) or indirect injection (1a). The special injector for vegetable oil (18) is mainly composed of an outlet (35) for fuel return, a terminal (37) for high-pressure fuel supply, and the rest of the injector (18) that forms its casing and its nozzle (38) through which the vegetable oil will leave. The aforementioned injectors (18) will be (without discarding mechanically actuated injectors) of the type of injectors used in Diesel engines for electronic injection, such as the type of injectors that use electromagnetic valves and injection control chambers to be activated, or those activated by a piezoelectric element; however, for the engines according to this invention with similar power to current Diesel engines, these injectors will comprise some special features, namely openings having orifices or diffusers (54) at the outlet nozzle (38) through which the vegetable oil leaves the injector (18) with a diameter or diameters smaller than in current injectors, the injection pin (39) that rests on the nozzle (38) with a smaller cone angle at its point (52) than those of pins of current injectors, and the inner wall (53) of the nozzle near the point of the injection pin with a more acute angle than in current injectors; in addition, the injection time of this injector (18), controlled by the electronic control unit, will be shorter than that used for current injectors, so that the volume of fuel (vegetable oil) in the injection in any revolutions regime of the engine (1) and (1a) of the present invention will have a ratio or approximate proportion of 50% to 99%, compared to the volume of the injection performed in the same circumstances by the injector of the Diesel injector, or compared to the sum of the total volume of the mixture (vegetable oil plus water).

Similarly, as regards figures 7, 8 and 11, views are provided of the special injector for water (19) as well as a detailed cross-section of its nozzle (38), that can be used in the four-stroke injection engines (1) and (1a) that run on vegetable oil and water, whether these have direct or injection (1) or indirect injection (1a). The special injector for water (19) is mainly composed of an outlet (35) for fuel return, an electrical terminal (39) for connection to the electrical system, a terminal (37) for high-pressure fuel supply, and the rest of the injector (19) that forms its casing and its nozzle (38) through which the vegetable oil will leave. The aforementioned injectors (19) will be (without discarding mechanically actuated injectors) of the type of injectors used in Diesel engines for electronic injection, such as the type of injectors that use electromagnetic valves and injection control chambers to be activated, or those activated by a piezoelectric element; however, for the engines according to this invention with similar power to current Diesel engines, these injectors will comprise some special features, namely openings having orifices or diffusers (57) at the outlet nozzle (38) through which the water leaves the injector (19) with a diameter or diameters smaller than in current injectors, the injection pin (39) that rests on the nozzle (38) with a smaller cone angle at its point (55) than those of pins of current injectors, and the inner wall (56) of the nozzle near the point of the injection pin with a more acute angle than in current injectors; in addition, the injection time of this injector (19), controlled by the electronic control unit, will be shorter than that used for current injectors, so that the volume of fuel (water) in the injection in any revolutions regime of the engine (1) and (1a) of the present invention will have a ratio or approximate proportion of 1% to 50%, compared to the volume of the injection performed in the same circumstances by the injector of the Diesel injector, or compared to the sum of the total volume of the mixture (vegetable oil plus water).

Optionally, as shown in figure 9, a new type of injector labeled respectively as (18a) and (19a) is proposed for injection of vegetable oil and water for the two embodiments of the engine of the present invention (1) and (1a), mainly composed of: a terminal for high-pressure fuel supply (37); an electrical terminal (36); a fuel return terminal (35); a fuel inlet channel (41) to the injection nozzle (38); a volumetric fuel cell (42); and a fuel return channel (43), the aforementioned features being provided for the injectors (18) and (19) of the present invention, that is, that as compared to the injectors currently used in Diesel engines, the diameter of the orifices or diffusers of the nozzle (38) are smaller, the cone angle of the point of the injection pin (39) resting on the seat of the nozzle (38) is also smaller, the inner wall of the nozzle (38) next to the point of the injection pin (39) has a more acute angle, and the injection time governed by the electronic control unit is also shorter, so that for the case of the vegetable oil injector (18a), the volume of fuel (vegetable oil) in the injection made in any revolution regime of the engine (1) and (1a) of the present invention will be performed in a ratio or proportion of approximately 50% to 99%, compared to the volume of injection performed in these same circumstances by the injector of the Diesel engine, or compared to the sum of the total volume of the mixture (vegetable oil plus water), and for the water injector (19a), the volume of fuel (water) in the injection performed in any revolution regime of the engine (1) and (1a) of the present invention will be performed in a ratio or proportion of approximately 1% to 50%, compared to the volume of the injection made in these same circumstances by the injector of the Diesel engine or compared to the sum of the total volume of the mixture (vegetable oil plus water). In addition to all this, the operation of the injector differs in some aspects from the electronic injectors currently available in the market. These differences mainly consist in that the pin (39) of the injection nozzle (38) forms a single piece with the control stem (40) of the injector, or is joined to it by screws, this stem (40) having some lips or lugs (44) disposed perpendicular to the longitudinal direction of the stem (40) such that they would form a cross when looking at them from the transverse section of the stem (40). A spring (45) rests on these lips or lugs (44) that is pressed on by a special tubular screw (46) provided with joints (46a) that is screwed on both of its ends to the casing of the injector (18a) or (19a). This screw (46) and joints (46a) are provided with gaps or orifices in order not to obstruct the fuel inlet channel (41) to the nozzle, as well as the fuel return channel (43). The spring (45) pushes the stem (40) and thereby the injection pin (39) against the seat of the nozzle (38), so that the orifice or orifices-diffusers of the nozzle (38) are perfectly sealed. On the top part of the injector (18a) or (19a) and inside a chamber (48) is disposed an electromagnet (49) that is joined to the top part of the casing of the injector (18a) or (19a) through anchorings (49a) formed by a cylinder of soft iron or steel, which on its bottom face has a cylindrical centered recess and a coil (50) whose turns are wound around said cylindrical metal part. Threaded or joined to the top part of the stem (40) is a cylindrical part (47) of soft iron or steel with a cylindrical centered recess made on its top face. This part (47) is also placed in the chamber (48), near to and opposite the electromagnet (49) and separated from it a short distance by a small spring (51) housed in the aforementioned recesses; thus, the said part (47) integrally joined to the stem (40) will be in the magnetic field of the electromagnet (49). The two springs (45) and (51) present in the injector (18a) or (19a) withstand the pressure exerted by the fuel (vegetable oil or water) in the volumetric cell (42) against the stem (40) of the pin (39) of the nozzle (38), keeping the pin (39) from rising from its seat and therefore preventing the injection of fuel. When an electric current is passed through the coil (50) of the electromagnet (49), the metal part (47) threaded or joined to the stem (40) of the nozzle pin (39) is attracted, lifting the pin (39) from its seat in the nozzle (38) and allowing fuel to pass, thereby producing an injection. The intermittent magnetic force exerted by the electromagnet (49) plus the pressure exerted by the fuel in the volumetric cell (42) on the stem (40) is enough to overcome the resistance of the springs (45) and (51), making the injection pin (39) pivot or oscillate, thereby achieving the intended operation of the injector (18a) or (19a).

As stated above, figure 12 represents a schematic view of the vegetable oil injection system that can be incorporated in the embodiments (1) and (1a) of the present invention, which are shown in figures 1 and 3. Thus, the vegetable oil injection system (58) will be similar to those existing and known for Diesel engines, with some differences, essentially comprising: electrical priming pump (71) submerged in the vegetable oil tank (6), which is provided with a prefilter (70); high pressure pump (59) (which can be optionally installed in the system, depending on whether or not the vegetable oil supply in the system is performed by an electrical pump) driven by the distribution chain; high-pressure regulator (60); electronic control unit (72) with connection strip for sensors (73) and connection strip for actuators or activators (74); high-pressure accumulator manifold (61) (or injection ramp); pressure gauge (62); ducts for distributing the vegetable oil, which can be for low-pressure suction (66), high-pressure supply (67), and return (68); electrical wires and circuits for the gauges (73a) and actuators (74a); special injectors (18) for vegetable oil. The system can also include one or more fuel heaters (64) so that the vegetable oil enters the engine already heated to a temperature approximately between 70°C and 80°C (necessary to start the engine, particularly in cold-weather locations) and a radiator or fuel coolant (65) for the water that returns to the tank (69). It is different from current injection systems for Diesel engines in that it uses the special injectors (18) for vegetable oil, and in that the injection time controlled by the electronic control unit (72) is shorter than that used by Diesel injectors, so that in this injection system the volume of fuel (vegetable oil) in the injection performed in any revolution regime of the engine (1) and (1a) of the present invention can be made in a ratio or proportion of approximately 50% to 99% compared to the volume of the injection in the same circumstances performed by the Diesel engine injector or compared to the total volume of the mixture (vegetable oil plus water).

As regards figure 13, it represents a schematic view of the water injection system that can be incorporated in the embodiments (1) and (1a) of the present invention, which are shown in figures 1 and 3. Thus, the water injection system (75) will be similar to those existing and known for Diesel engines, with some differences, essentially comprising: a water tank (86), which is provided with a prefilter (87); a high pressure pump (76) (which can be optionally installed in the system, depending on whether or not the water supply for the injections is performed by a high-pressure electrical pump) driven by the distribution chain; high-pressure regulator (77); an electronic control unit (88) with a connection strip for sensors (89) and a connection strip for actuators or activators (90); a high-pressure accumulator manifold (78) (or injection ramp); a pressure gauge (79); ducts for distributing the water, which can be for low-pressure suction (83), high-pressure supply (84), and return (85); water filter (80), electrical wires and circuits for the sensors (89a) and actuators (90a); special injectors (19) for water. The system can also include one or more fuel heaters (81) so that the water enters the engine already (necessary in cold-weather locations) and a radiator or fuel coolant (82) for the water that returns to the tank (86). It is different from current injection systems for Diesel engines in that it uses the special injectors (19) for water defined above, and in that the injection time controlled by the electronic control unit (88) is shorter than that used by Diesel injectors, so that in this injection system the volume of fuel (water) in the injection performed in any revolution regime of the engine (1) and (1a) of the present invention can be made in a ratio or proportion of approximately 1% to 50% compared to the volume of the injection in the same circumstances performed by the Diesel engine injector or compared to the total volume of the mixture (vegetable oil plus water).

According to the first embodiment of the present invention proposed, the internal combustion engine (1) with indirect injection meant for operation using vegetable oil and water as fuels can be specifically defined in its operation by the configuration of some of its strokes, stages and times at which the fuel injections take place (vegetable oil and water). To better understand the operation of this first embodiment, its different strokes are defined herein with their corresponding and specific characteristics (stages, injection times, etc.) as well as the different movements of the piston (6) that originate its motion.

Figure 14 shows the intake stroke of the engine (1), wherein the exhaust valve (12) is closed and the intake valve (11) opens, allowing air (91) to enter the cylinder (5) and the auxiliary pre-combustion chamber (10) while the piston (6) moves from the top dead center to bottom dead center positions. The engine (1) is defined in this stage because the injection of vegetable oil (92) takes place in said intake stroke by the injector (18), in the special auxiliary pre-combustion chamber (10) and in the combustion chamber (9) or cylinder (5) to a lesser extent, when the head of the piston (6) is almost in the bottom dead center, but before reaching this point.

Figures 15 and 16 show the compression stroke of the engine (1), in which the exhaust valve (12) and intake valve (11) will be closed, and while the piston (6) moves from bottom dead center to top dead center, the air and vegetable oil (93) deposited in the cylinder (5) and the auxiliary pre-combustion chamber (10) are compressed and therefore heated, their temperature rising quickly so that the vegetable oil reaches a temperature between its critical temperature and its self-ignition temperature, without reaching the latter. The engine (1) is defined in this stage because the injection of water (94) takes place in said compression stroke by the injector (19), in the special auxiliary pre-combustion chamber (10) and in the combustion chamber (9) to a lesser extent, when the head of the piston (6) is almost at top dead center, but before reaching this point, at which time the chemical reactions and ignition of the mixture start, and the overpressure safety valve (15) can remain closed or be momentarily open if the pressure in the cylinder (5) or the combustion chamber (9) and the auxiliary pre-combustion chamber (10) exceeds the specified pressure values.

Figure 17 shows the combustion stroke (also known as work or power stroke) of engine (1). The exhaust valve (12) and intake valve (11) will be closed. The engine (1) is defined in this stage in that, when the air, vegetable oil and water are mixed in the previous compression stage in the specified percentages and required environmental and temperature conditions, the chemical reactions specified and defined previously (electrolysis and hydrolysis) take place, obtaining almost simultaneously the combustion (95) of the mixture, and all of the expansive force due to the combustion gases concentrated in a minimal volume in the combustion chamber (9) and auxiliary pre-combustion chamber (10) is applied to the head or base of the piston (6) when it is in top dead center, pushing it and moving it with great force to the bottom dead center point.

Figure 18 represents the exhaust stroke of the engine (1), in which the intake valve (11) will be closed and the exhaust valve (12) will be open. The piston (6) will move from the bottom dead center to the top dead center point, in its path displacing the combustion gases and fumes (96) to the exhaust valve (12), thereby making these gases (96) exit through the exhaust duct (14) and subsequently reach the exhaust pipe and the outside. This new engine (1) is clearly differentiated in this stage in that the exhaust gases (96), as they originate from organic and ecological alternative fuels (vegetable oil and water) are less pollutant than gases originating from combustion of fossil fuels (gasoil or gasoline).

According to the second embodiment (1a) of the present invention, the internal combustion engine (1) with direct injection meant for operation using vegetable oil and water as fuels can be specifically defined in its operation by the configuration of some of its strokes, stages and times at which the fuel injections take place (vegetable oil and water). To better understand the operation of this second embodiment, its different strokes are defined herein with their corresponding and specific characteristics (stages, injection times, etc.) as well as the different movements of the piston (6) that originate its motion.

Thus, figure 19 shows the intake stroke of this second embodiment of the engine (1a), wherein the exhaust valve (12) is closed and the intake valve (11) opens, allowing air (97) to enter the cylinder (5) and the combustion chamber (9) while the piston (6) moves from the top dead center to bottom dead center positions. The engine (1a) is defined in this stage in that the vegetable oil injection (98) takes place in said intake stroke by the injector (18), in the cylinder (5) or the combustion chamber (9), when the head of the piston (6) is almost in the top dead center, initiating its intake movement and instants after passing said top dead center position.

Figures 20 and 21 show the compression stroke of this second embodiment (1a) of the present invention. In this stroke the exhaust valve (12) and intake valve (11) will be closed, and while the piston (6) moves from bottom dead center to top dead center, the air and vegetable oil (99) deposited in the cylinder (5) or in the combustion chamber (9) are compressed and therefore heated, their temperature rising quickly so that the vegetable oil reaches a temperature between its critical temperature and its self-ignition temperature, without reaching the latter. The engine is defined in this stage because the injection of water (100) takes place in said compression stroke by the injector (19), in the combustion chamber (9) when the head of the piston (6) is almost at top dead center, but before reaching this point, at which time the chemical reactions and ignition of the mixture start, and the overpressure safety valve (15) can remain closed or be momentarily open if the pressure in the cylinder (5) or the combustion chamber (9) exceeds the specified pressure values.

Figure 22 shows the combustion stroke (also known as work or power stroke) of this second embodiment (1a) of the engine. The exhaust valve (12) and the intake valve (11) will be closed. The engine is defined in this stage in that, when the air, vegetable oil and water are mixed in the previous compression stage in the specified percentages and required environmental and temperature conditions, the chemical reactions specified and defined previously (electrolysis and hydrolysis) take place, obtaining almost simultaneously the combustion (101) of the mixture, and all of the expansive force due to the combustion gases concentrated in a minimal volume in the combustion chamber (9) is applied to the head or base of the piston (6) when it is in top dead center, pushing it and moving it with great force to the bottom dead center point.

Figure 23 shows the exhaust stroke of this second embodiment (1a) of the engine. The intake valve (11) will be closed and the exhaust valve (12) will be open. The piston (6) will move in this stage from the bottom dead center to the top dead center point, in its path displacing the combustion gases and fumes (102) to the exhaust valve (12), thereby making these gases (102) exit through the exhaust duct (14) and subsequently reach the exhaust pipe and the outside. This new engine is clearly differentiated in this stage in that the exhaust gases (102), as they originate from organic and ecological alternative fuels (vegetable oil and water) are less pollutant than gases originating from combustion of fossil fuels (gasoil or gasoline).

The drawings and several examples of the different embodiments of the present invention have been described above. However, some of the elements that make up these embodiments have only been described implicitly. A more explicit and detailed description is now given of these different systems, elements and their embodiments, which constitute in practice the different embodiments of the present engine. This will be done with the aid of the figures described above and with reference to some of the elements referred in them. Thus: The combustion system (not all of whose elements are shown in figures 1 and 3) employed by the two embodiments of the four-stroke internal combustion engine of the invention, with direct or indirect injection, designed to run using vegetable oil and water as fuels comprises, in each cylinder (5): a piston (6), a combustion chamber (9), an auxiliary combustion chamber (10) adjoining the combustion chamber (9), a nozzle (24) connecting the two chambers for the first embodiment (1) of the engine, a crankshaft (8), a connecting rod (7), a cam, a flywheel, an intake valve (11), an exhaust valve (12), a glow plug (17), an air filter, an intake manifold and an exhaust manifold, the system mainly consisting in that the embodiments (1) and (1a) of the present invention use two special injectors for each cylinder (5), one injector (18) for vegetable oil and one injector (19) for water, which alternatively inject fuel into the auxiliary pre-combustion chamber (10) and to a lesser extent the combustion chamber (9) in the embodiment (1) of the engine, and also inject directly in the combustion chamber (9) for the embodiment (1a) of the engine, these chambers being made of a special material or having a special coating (21). The vegetable oil is injected first in an approximate ratio or proportion with respect to the total volume of vegetable oil plus water injected of 50% to 99% of the volume injected in each combustion, in the intake stroke, and subsequently the water is injected in an approximate ratio or proportion of 50% to 1% of the volume injected in each combustion, in the compression stroke. These proportions can be changed to the desired percentage values, provided the combustion of the mixture takes place efficiently. The sum of the volume of vegetable oil and water injected in one combustion in the engine (1) and (1a) of the present invention will be similar or equal to the volume of gasoil injected in Diesel engines in one of their combustions, naturally taking into account the power and rotation speed values of the engine, similar for both engines. In the development and analysis of this new engine (1) and (1a), it may occur that maximum efficiency of combustion values are obtained using fuel volumes (of vegetable oil and water) in their injections with a total volume that is even less than the volume of gasoil injected in Diesel engines.

The electrical system (not shown in any scheme in the figures, although some of its elements can be seen in figures 1, 3, 12 and 13) used by the two embodiments (1) and (1a) of the four-stroke internal combustion engine conceived for operation using as fuels vegetable oil and water, mainly comprises: battery, starter motor, injection electrical systems (58) and (75), crankshaft (8), alternator, electrical pump (71) submerged in the vegetable oil tank (69) and connected to the vegetable oil injection system (58) for feeding fuel in the engine startup, and several electronic control units comprising at least a first electronic control unit (72) that controls the timing of the multiport injection of vegetable oil, allowing to control the injectors (18) so that the sequential injection in each cylinder (5) takes place in the intake stroke at the precise time and with the required frequency according to the speed of rotation of the engine, with the necessary sensors (73) and probes at the required locations, such as in the crankshaft (8) or camshaft, membranes in the suction ducts, etc., as well as the actuators or activators (74) needed for this function, or the incorporation of any other devices needed, and a second electronic control unit (88) similar to the first one that controls and regulates the timing of the water multipoint injection, allowing to control the injectors (19) so that the sequential injection in each cylinder is performed in the compression stroke at the precise time and with the required frequency, according to the speed of rotation of the engine, having the necessary sensors (89) and probes also located in the crankshaft (8), camshaft, etc. and the actuators needed for this function, or any other devices necessary.

The auxiliary pre-combustion chamber (10) of each cylinder (5), for indirect injection engines (1), shown in figure 1, can be used with the current shapes, such as spherical; however, a novel auxiliary pre-combustion chamber (10) is proposed with a specific difference for the indirect injection four-stroke internal combustion engine (1), designed to run on vegetable oil and water as fuels, the main difference of which is that its internal shape is that of an ellipsoid intersected by the nozzle (24) of said pre-combustion chamber (10) that leads to the combustion chamber (9) of the engine cylinder (5) of the engine (1), this chamber (10) being located in the cylinder head (3).

The glow plug or heating plug (17) placed in each cylinder (5) of the four-stroke internal combustion engine meant to run on vegetable oil and water as fuels, with either indirect injection (1) or direct injection (1a), represented respectively in figures 1 and 3, can be placed in either the cylinder head of the engine (1) and located in the auxiliary pre-combustion chamber (10) or in the cylinder head of the engine (1a) and located in the combustion chamber (9). It is of the type of glow plugs similar to those used in Diesel engines. This glow plug (17) has a simple operation, consisting of passing electrical current through a resistance in the plug in order to heat it, making it glow and give off large amounts of heat to increase the temperature of the combustion chamber, the air and vegetable oil contained in them. The electrical resistor of this plug (17) intended for the two embodiments (1) and (1a) of the engine of the present invention, shall be strong enough to raise the temperature of the air and vegetable oil contained in the auxiliary pre-combustion chamber (10) of the engine (1) or in the combustion chamber (9) of the engine (1a), at the time of starting the engine (1) or (1a), to approximately 210° C. If necessary, more than one glow plug (17) can be fitted in each cylinder (5) of the engine (1) and (1a) of the present invention.

The starting system for the four-stroke internal combustion engine with either indirect injection (1) or direct injection (1a) that runs with vegetable oil and water as fuels is not represented in any of the figures. In order to describe it reference will be made to some of its elements, as shown in figures 1, 3, 7, 8, 10, 11, 12, and 13. Its basic operation can be described as follows: when the start switch is placed in its first position (heating position), in addition to closing the electrical circuits that supply electrical power to the glow plugs (17) and fuel heaters (64) and (81), a third electrical circuit is turned on after a certain time regulated by a timer in order to activate a fuel priming pump (71), disposed submerged in the vegetable oil tank (69), which communicates through some ducts (66) and (67) with the accumulator manifold (61) of the vegetable oil injection system (58), so that this manifold (61) can have enough pressure so that the injectors (18) (activated electrically), through the orifices or diffusers (54) in their nozzles (38), can execute one or several simultaneous injections in the various auxiliary pre-combustion chambers and to a lesser extent the combustion chambers of the engine (1), or directly in the combustion chamber (9) of the engine (1a), in the heating time of the glow plug, without having had to actuate the starter motor and therefore without the distribution chain having driven the high-pressure injection pump (59). A fourth electrical circuit activated simultaneously in the same way as the third one will activate the injectors (18) so that they simultaneously inject vegetable oil. The pin (39) that closes and opens the nozzle (38) of the injector (18) will be lifted electromagnetically, which is the purpose of this fourth circuit, so that the electromagnets of the vegetable oil injectors (18) can be actuated by the aforementioned circuit and, when this circuit is disconnected, they can be actuated by another circuit controlled by an electronic unit (72). During the heating time a long injection of vegetable oil is preferable, quickly activated at the start of the heating, is preferable to several alternating injections. For this purpose, this fourth electrical circuit will be provided with an automatic switch, clock or timer that after a predefined time is disconnected from the electrical supply of the battery. This switch or timer can be of any of the types available in the market that can comply with the necessary requirements. Thus, when the start switch is placed in its second position (start position), three of the four aforementioned circuits will be disconnected, and only the circuit of the glow plug (17) will remain connected, while three other circuits are connected. One of these three circuits controls the synchronized and sequential injection of the vegetable oil injectors (18) by means of an electronic unit (72). Another circuit controls the synchronized and sequential injection of the water injectors (19) by another electronic unit (88). The third circuit starts the starter motor and thereby the distribution chain, the high pressure pumps (one for the vegetable oil (59) and another for the water (76), or in their absence high-pressure electrical pumps), the crankshaft (8), the flywheel and finally the pistons (6). In these circumstances, with a vegetable-oil rich volume in each of the auxiliary pre-combustion chambers (10) and to a lesser extent in the combustion chamber (9) of engine (1), and in each combustion chamber (9) of engine (1a), the intake air and the injected vegetable oil will be heated by the glow plugs (17) to a temperature of approximately 210°C, and then heated again by the first compression (or first compressions) of the piston (6). The vegetable oil must be heated to at least a critical temperature between approximately 160°C and 210°C, depending on the type of vegetable oil used. Then, when water is injected in the auxiliary pre-combustion chamber (10) and in the combustion chamber (9) to a lesser extent in engine (1), or only in the combustion chamber (9) in engine (1a), in the compression stroke the entire mixture ignites, combusting spontaneously so that the combustion gases expand moving the piston (6) from the dead bottom center to the top dead center points and thereby starting the engine (1) and (1a). Once the engine (1) and (1a) of the present invention has started, the starter motor circuit and the circuit of the glow plugs (17) will automatically be disconnected.

The cylinders (5) of the two embodiments (1) and (1a) of the engine of the present invention can be made when casting the engine block (2) and (2a) or by incorporating cylinder sleeves (20) in the engine block (2) and (2a).

When the cylinders (5) are cast together with the respective engine blocks (2) and (2a), without using sleeves (20), for the two embodiments of the four-stroke internal combustion engine that runs using vegetable oil and water as fuels, this will constitute a first example of embodiment of these cylinders (5), wherein the engine block (2) and (2a) will be made of stainless steel, either with an alloy of iron, carbon, chromium or nickel, or an alloy of only iron, carbon and nickel.

In a second embodiment for the aforementioned cylinders (5) the engine block (2) and (2a) will be made or cast with casting material and the cylinders (5) will subsequently receive a nickel coating.

In a third form of embodiment for the cylinders (5) the engine block (2) and (2a) can be made or cast with casting material and the cylinders (5) will subsequently receive a ceramic coating or a vitreous or ceramic crystal enamel coating.

The special cylinder sleeve (20) for the two embodiments (1) and (1a) of the four-stroke internal combustion engine that runs using vegetable oil and water as fuels, will constitute a first example of embodiment wherein the sleeve (20) is made of stainless steel, with an alloy of iron, carbon, chromium or nickel, or an alloy of only iron, carbon and nickel.

In a second embodiment of this sleeve (20) it can be made of steel with a nickel coating.

In a third embodiment, the cylinder sleeve (20) can be made of steel with an internal ceramic coating or a vitreous or ceramic crystal enamel coating.

The special coating or manufacture with a special material (21) of some essential elements that compose the two embodiments (1) and (1a) of the four-stroke internal combustion engine that runs using vegetable oil and water as fuels, constitutes a first example of embodiment wherein the piston (6), the cylinder head (3) and (3b) as applicable, the intake valve (11), the exhaust valve (12), the intake duct (13), the exhaust duct (14) and the auxiliary pre-combustion chamber (10), when applicable, are made of stainless steel, either of an alloy of steel, carbon, chromium and nickel, or an alloy of only iron, carbon and nickel.

The special coating or manufacture with a special material (21) of some essential elements that compose the two embodiments (1) and (1a) of the four-stroke internal combustion engine that runs using vegetable oil and water as fuels, constitutes a second example of embodiment wherein the piston (6), the bottom area of the cylinder head (3) and (3b) as applicable, the intake valve (11), the exhaust valve (12), the intake duct (13), the exhaust duct (14) and the auxiliary pre-combustion chamber (10), when applicable, are made of stainless steel, with a nickel coating.

The special coating or manufacture with a special material (21) of some essential elements that compose the two embodiments (1) and (1a) of the four-stroke internal combustion engine that runs using vegetable oil and water as fuels, constitutes a third example of embodiment wherein the piston (6) or its head, the cylinder head (3) and (3b) as applicable, its bottom area or area leading to the combustion chamber (9), the intake valve (11), the exhaust valve (12), the intake duct (13), the exhaust duct (14) and the auxiliary pre-combustion chamber (10), when applicable, are made of aluminum or steel with a special coating of several layers of polytetrafluoroethylene.

The special coating or manufacture with a special material (21) of some essential elements that compose the two embodiments (1) and (1a) of the four-stroke internal combustion engine that runs using vegetable oil and water as fuels, constitutes a third example of embodiment wherein the piston (6) or its head, the cylinder head (3) and (3b) as applicable, its bottom area or area leading to the combustion chamber (9), the intake valve (11), the exhaust valve (12), the intake duct (13), the exhaust duct (14) and the auxiliary pre-combustion chamber (10), when applicable, are made of steel with a ceramic or vitreous enamel or ceramic crystal enamel coating.

One of the specific characteristics of this invention of the two embodiments (1) and (1a) of a four-stroke internal combustion engine that runs using as fuels vegetable oil and water consists in that it comprises two independent fuel tanks, one for vegetable oil (69) and one for water (86).

One of the specific characteristics of this invention of the two embodiments (1) and (1a) of a four-stroke internal combustion engine that runs using as fuels vegetable oil and water consists in that it comprises two independent injection systems, one for vegetable oil (58) and one for water (75).

In the injection advance, for both the vegetable oil and the water, of the four-stroke internal combustion engine of the present invention that runs on vegetable oil and water as fuels, with either indirect injection (1) or direct injection (1a) it is necessary to take into account and measure the necessary time parameters for obtaining the aforementioned chemical reactions, as well as the propagation and total inflammation times of the mixture of fuels (vegetable oil and water) in the combustion stroke, as the combustion of the entire mixture does not actually take place instantaneously, but instead proceeds gradually. It is also necessary to add the injection times (of vegetable oil and water) controlled by the electronic control units (72) and (88), which supply the advance for the injection advance of vegetable oil at the time, so that the mixture combusts without delay, such that the entire expansive force of the combustion is exerted on the head or base of the piston (6). These advances are performed according to the rotation speed of the engine, so that they will be greater the faster the engine is rotating.

Thus, according to the first embodiment of the present invention of a four-stroke internal combustion engine, with indirect injection (1) conceived for operation using as fuels vegetable oil and water, its operation can be defined specifically in that the injection advance consists of the vegetable oil injection takes place in a special auxiliary pre-combustion chamber (10) and in the combustion chamber (9) to a lesser extent, in the intake stroke (air intake in the cylinder (5) and in the auxiliary pre-combustion chamber (10)), when the head of the piston (6) is almost at bottom dead center, but before reaching this point, and the water injection takes place in the aforementioned auxiliary pre-combustion chamber (10) and in the combustion chamber (9) to a lesser extent, in the compression stroke, before the head of the piston (6) is at top dead center. The distance from the head of the piston (6) to top dead center at the time of water injection depends on the water injection advance, and similarly the distance from the head of the piston (6) to bottom dead center at the time of vegetable oil injection depends on the vegetable oil injection advance. These advances will be greater the faster the engine rotation speed. All of this is regulated by the two electronic control units (72) and (88) of the injection systems (one for vegetable oil (72) and one for water (88)), which with their sensors (73) and (89) and their actuators or activators (74) and (90), will determine the ideal parameters at each time for the injection advances, both for vegetable oil and water.

The injection advance in the second embodiment of the four-stroke internal combustion engine with direct injection (1a) that runs on vegetable oil and water as fuels can be specifically defined regarding its operation in that in the injection advance the vegetable oil injection is performed directly in the combustion chamber (9) in the intake stroke (air intake in the cylinder), when the piston (6) is practically initiating intake and its head is near the top dead center point, but moving away from it, and the water injection is performed in the combustion chamber (9) in the compression stroke, before the piston head is at top dead center. The distance from the head of the piston (6) to top dead center at the time of water injection depends on the water injection advance, and similarly the distance from the head of the piston (6) to top dead center at the time of vegetable oil injection depends on the vegetable oil injection advance. These advances will be greater the faster the engine rotation speed. All of this is regulated by the two electronic control units (72) and (88) of the injection systems (one for vegetable oil (72) and one for water (88)), which with their respective sensors (73) and (89) and their actuators or activators (74) and (90) will determine the ideal parameters at each time for the injection advances, both for vegetable oil and water.

## Claims

1. Internal combustion engine that runs on alternative fuels, analogous to alternative internal combustion engines of the compression type, comprising a working method that uses jointly as fuels vegetable oil and water, for the execution of which method the engine is provided with the following elements and operations:
- A vegetable oil injector (18) for each cylinder (5), located in the cylinder head (3),
- A water injector (19) for each cylinder (5), located in the cylinder head (3),
- Two independent fuel storage tanks (69, 86), one for vegetable oil and one for water,
- The vegetable oil is injected in the engine intake stroke, at any time in it, and preferably at a time in which the piston (6) is reaching the bottom dead center point,
**characterized in that**:
- An overpressure safety valve (15) for each cylinder, located in the combustion chamber (9), that is communicated through a duct with the exhaust duct (14),
- The water or steam injection is performed in the engine compression stroke, shortly before the piston (6) reaches the top dead center point,
- The percentage by volume of vegetable oil injected is from 50% to 99%, and that of water or steam injected is from 1% to 50%.

2. Internal combustion engine that runs on alternative fuels, according to claim 1, **characterized in that** it is a direct injection engine, so that in its working process vegetable oil and water are alternately injected directly into the engine cylinders (5).

3. Internal combustion engine that runs on alternative fuels, according to claim 1, **characterized in that** it is an indirect injection engine, so that in its working process vegetable oil and water are alternately injected into an auxiliary pre-combustion chamber (10) adjoining each engine cylinder (5), this injection action possibly making part of the vegetable oil splash and fall in the adjoining cylinder (5) connected to the auxiliary pre-combustion chamber (10).

4. Internal combustion engine that runs on alternative fuels, according to claims 1, 2 or 3, **characterized in that** the piston (6) has a notch (32) with a shape defined by the intersection of a concave spherical cap and an inverted truncated cone, with rounded intersections, this notch (32) being centered at the base or head of the piston (6), and having a circular diameter of the upper base of the cone that is smaller than the diameter of the piston (6).

5. Internal combustion engine that runs on alternative fuels, according to claims 1, 2 or 3, **characterized in that** the overpressure safety valve (15) is provided with a metal part (33) with a shape defined by a small sphere and a small cylinder that intersect centrally, that is, the cylinder axis parallel to its generatrix lines intercepts the center of the sphere, wherein the diameter of the sphere is larger than that of the cylinder; this part (33) rests at its spherical part on a seat located on the duct (16), closing the duct (16) at this point as the part (33) is pushed on by a spring (34) resting on the spherical surface of said metal part (33), its internal diameter being tangent (with some clearance) to the cylinder of the spherical-cylindrical part (33), the spring (34) being pushed on at its other end by a tubular shaped screw (22), that is, hollow on the inside, this screw (22) having a seat for the spring (34), a threading to allow screwing onto the cylinder head (3), a nozzle or opening for connection to a hose (23) or tube that communicates with the exhaust duct (14); with the overpressure safety valve (15) conformed in this way, when the pressure in the combustion chamber (9) exceeds a specified value the spherical-cylindrical part (33) will rise from its seat, opening the communication duct (16) between the combustion chamber (9) and the exhaust duct (14), therefore allowing a flow of compressed air to pass through this duct (16) from the combustion chamber (9) to the exhaust duct (14), to maintain the necessary and required pressure in the combustion chamber (9).

6. Internal combustion engine that runs on alternative fuels, according to claims 1, 2 or 3, **characterized in that** it comprises for each cylinder:
- A first injector for vegetable oil (18) with an opening having small orifices or diffusers (54) of the nozzle (38) through which the vegetable oil leaves from the injector (18), and with a small free space between the point (52) of the injection pin (39) and the inner wall (53) of the nozzle (38) near the point (52) of the injection pin (39) that rests on the nozzle (38), but leaving enough space to allow the flow of vegetable oil to pass without difficulty when the injection is performed, so that the volume of vegetable oil in the injection performed by the injector (18) in any revolutions regime of the engine is enough to provide the foreseen proportion of vegetable oil,
- A second injector for water (19) with an opening having small orifices or diffusers (57) of the nozzle (38) through which the water leaves from the injector (19), and with a small free space between the point (55) of the injection pin (39) and the inner wall (56) of the nozzle (38) near the point (55) of the injection pin (39) that rests on the nozzle (38), but leaving enough space to allow the flow of water to pass without difficulty when the injection is performed, so that the volume of water in the injection performed by the injector (19) in any revolutions regime of the engine is enough to provide the foreseen proportion of water.

7. Internal combustion engine that runs on alternative fuels, according to claims 1, 2, 6 and 3, **characterized in that** it comprises:
an injection pin (39) housed in the injection nozzle (38) that forms a single piece with the control stem (40) of the injector, or is joined to it by screws, this stem (40) having some lips or lugs (44) disposed perpendicular to the longitudinal direction of the stem (40);
a spring (45) rests on these lips or lugs (44) that is pressed on by a tubular screw (46) provided with joints (46a) that is screwed on both of its ends to the casing of the injector;
this screw (46) and joints (46a) are provided with gaps or orifices in order not to obstruct the fuel inlet channel (41) to the nozzle, as well as the fuel return channel (43);
on the top part of the injector and inside a chamber (48) is disposed an electromagnet (49) that is joined to the top part of the casing of the injector through anchor rings (49a) formed by a cylinder of soft iron or steel, which on its bottom face has a cylindrical centered recess and a coil (50) whose turns are wound around said cylindrical metal part;
threaded or joined to the top part of the stem (40) is a cylindrical part (47) of soft iron or steel with a cylindrical centered recess made on its top face;
this part (47) is also placed in the chamber (48), near to and opposite the electromagnet (49) and separated from it a short distance by a small spring (51) housed in the aforementioned recesses.

8. Internal combustion engine that runs on alternative fuels, according to claims 1, 2 or 3, **characterized in that** it comprises two injection systems:
- One for vegetable oil (58) that uses the vegetable oil injectors (18) and one or more heaters (64);
- And another for water (75) that uses the water injectors (19) and a heater (81).

9. Internal combustion engine that runs on alternative fuels, according to claims 1, 2 or 3, **characterized in that** its electrical system comprises at least one or two electronic control units that control and regulate the timing of the vegetable oil multipoint injection, allowing to control the injectors (18) so that the sequential injection is performed in the intake stroke, at the precise time and frequency according to the rotation speed of the engine, being provided with actuators, sensors and probes for this purpose, as well as to control and regulate the timing of the water multipoint injection, allowing to control the injectors (19) so that the sequential injection is performed in the compression stroke, at the precise time and frequency according to the rotation speed of the engine, being provided with actuators, sensors and probes for this purpose.

10. Internal combustion engine that runs on alternative fuels, according to claims 1 and 3, **characterized in that** the auxiliary pre-combustion chamber (10) for each cylinder (5) comprises an internal shape is that of an ellipsoid intersected by the nozzle (24) of said pre-combustion chamber (10), and leads to the cylinder (5) of the engine.

11. Internal combustion engine that runs on alternative fuels, according to claims 1, 2 or 3, **characterized in that** the glow or heating plugs (17) used to start the engine are able to raise the temperature of the air and the priming vegetable oil at the time of heating in order to start the engine to a temperature of approximately 210°C.

12. Internal combustion engine that runs on alternative fuels, according to claims 1, 2 or 3, **characterized in that** the starting system for the engine essentially comprises the following processes and elements:
a third electrical circuit is turned on after a short time regulated by a timer that activates a fuel priming pump (71), disposed submerged in the vegetable oil tank (69);
a fourth electrical circuit activated simultaneously in the same way as the third one activates the injectors (18) provided with an automatic switch, clock or timer that after a predefined time is disconnected from the electrical supply of the battery; thus, when the start switch is placed in its second position, three of the four aforementioned circuits will be disconnected, and only the circuit of the glow plugs or heaters (17) will remain connected, while three other circuits are connected;
one of these three circuits controls the synchronized and sequential injection of the vegetable oil injectors (18) by means of an electronic unit, another circuit controls the synchronized and sequential injection of the water injectors (19) by the electronic control unit, and the third circuit starts the starter motor and thereby the distribution chain, the high pressure pumps, the crankshaft (8), the flywheel and finally the pistons (6).

13. Internal combustion engine that runs on alternative fuels, according to claims 1, 2 or 3, **characterized in that** in its injection advances the necessary time parameters for obtaining combustion will be taken into account and measured, as well as the propagation and total inflammation times of the mixture of fuels (vegetable oil and water), controlled by the electronic control unit or units, which will supply the advance needed to advance the vegetable oil injection at its time and the water injection at its time, so that the mixture combusts without delay, foreseeing that the entire force of the combustion will be exerted on the head or base of the piston when it is in the top dead center position; the distance from the piston head to the top dead center point at the time of water injection depending on the water injection advance, and the distance from the piston head to the bottom dead center point at the time of the vegetable oil injection depending on the vegetable oil injection advance; these injection advances (vegetable oil and water) are performed according to the rotation speed of the engine, so that they will be greater the faster the engine is rotating; all of this is controlled by one or two electronic control units that will determine the ideal parameters at each time for the injection advances of the vegetable oil and the water.

14. Internal combustion engine that runs on alternative fuels, according to claims 1, 2 or 3, **characterized in that** when the cylinders are made by casting them with the corresponding engine block, without using cylinder sleeves, this engine block is made of the following materials:
- Stainless steel, either with an alloy of iron, carbon, chromium and nickel, or an alloy of only iron, carbon and nickel,
- Casting material, subsequently incorporating a nickel coating on the cylinders,
- Casting material, subsequently incorporating a ceramic coating or a vitreous enamel or ceramic crystal enamel coating on the cylinders.

15. Internal combustion engine that runs on alternative fuels, according to claims 1, 2 or 3, **characterized in that** if the cylinders (5) incorporate cylinder sleeves (20), these are made of the following materials:
- Stainless steel, either with an alloy of iron, carbon, chromium and nickel, or an alloy of only iron, carbon and nickel,
- Steel with a nickel coating,
- Steel with a ceramic coating or a vitreous or ceramic crystal enamel coating on its inside.

## Patentansprüche

1. Verbrennungsmotor, der analog zu alternativen Verbrennungsmotoren vom Kompressionstyp mit alternativen Kraftstoffen betrieben wird, wobei er ein Arbeitsverfahren umfasst, das als Brennstoffe Pflanzenöl und Wasser gemeinsam verwendet, für dessen Ausführung der Motor mit den folgenden Elementen und Operationen ausgestattet ist:
- Einer Pflanzenöleinspritzdüse (18) für jeden Zylinder (5), die sich im Zylinderkopf (3) befindet,
- Einer Wassereinspritzdüse (19) für jeden Zylinder (5), der sich im Zylinderkopf (3) befindet,
- Zwei unabhängigen Treibstofftanks (69, 86), einer für Pflanzenöl und einer für Wasser,
- wobei das Pflanzenöl im Ansaugtakt des Motors eingespritzt wird, und zwar zu jedem beliebigen Zeitpunkt, vorzugsweise zu einem Zeitpunkt, an dem der Kolben (6) den unteren Totpunkt erreicht,
**dadurch gekennzeichnet, dass**:
- sich ein Überdrucksicherheitsventil (15) für jeden Zylinder in der Brennkammer (9) befindet, die über einen Kanal mit dem Abgaskanal (14) verbunden ist,
- Die Wasser- oder Dampfeinspritzung im Kompressionshub des Motors, kurz bevor der Kolben (6) den oberen Totpunkt erreicht, erfolgt
- Der Volumenanteil des eingespritzten Pflanzenöls zwischen 50 und 99 % und der des eingespritzten Wassers oder Dampfes zwischen 1 und 50% liegt.

2. Verbrennungsmotor, der mit alternativen Kraftstoffen betrieben wird, nach Anspruch 1, **dadurch gekennzeichnet, dass** er ein Motor mit Direkteinspritzung ist, so dass in seinem Arbeitsprozess Pflanzenöl und Wasser abwechselnd direkt in die Motorzylinder (5) eingespritzt werden.

3. Verbrennungsmotor, der mit alternativen Kraftstoffen betrieben wird, nach Anspruch 1, **dadurch gekennzeichnet, dass** es sich um einen Motor mit indirekter Einspritzung handelt, so dass bei seinem Arbeitsprozess Pflanzenöl und Wasser abwechselnd in eine Hilfsvorverbrennungskammer (10) eingespritzt werden, die an jeden Motorzylinder (5) angrenzt, wobei dieser Einspritzvorgang möglicherweise einen Teil des Pflanzenöls in den angrenzenden Zylinder (5) spritzen und fallen lässt, der mit der Hilfsvorverbrennungskammer (10) verbunden ist.

4. Verbrennungsmotor, der mit alternativen Kraftstoffen betrieben wird, nach Anspruch 1, 2 oder 3, **dadurch gekennzeichnet, dass** der Kolben (6) eine Kerbe (32) mit einer Form aufweist, die durch den Schnittpunkt einer konkaven Kugelkappe und eines umgekehrten Kegelstumpfes mit abgerundeten Schnittpunkten definiert ist, wobei diese Kerbe (32) an der Basis oder dem Kopf des Kolbens (6) zentriert ist und einen kreisförmigen Durchmesser der oberen Basis des Konus aufweist, der kleiner als der Durchmesser des Kolbens (6) ist.

5. Verbrennungsmotor, der mit alternativen Kraftstoffen nach Anspruch 1, 2 oder 3 betrieben wird, **dadurch gekennzeichnet, dass** das Überdrucksicherheitsventil (15) mit einem Metallteil (33) mit einer Form ausgestattet ist, die durch eine kleine Kugel und einen kleinen Zylinder definiert ist, die sich zentral schneiden, d. h. die Zylinderachse parallel zu ihren Erzeugenden den Mittelpunkt der Kugel schneidet, wobei der Durchmesser der Kugel größer als der des Zylinders ist; dieses Teil (33) an seinem kugelförmigen Teil auf einem Sitz liegt, der sich auf dem Kanal (16) befindet, wobei er der Kanal (16) an diesem Punkt schließt, da das Teil (33) durch eine Feder (34) gedrückt wird, die sich auf der sphärischen Oberfläche des Metallteils (33) abstützt, wobei ihr Innendurchmesser (mit einem gewissen Spiel) den Zylinder des kugelförmig-zylindrischen Teils (33) tangiert, wobei die Feder (34) an ihrem anderen Ende durch eine rohrförmige, d. h. innen hohle Schraube (22) gedrückt wird, wobei diese Schraube (22) einen Sitz für die Feder (34), ein Gewinde zum Aufschrauben auf den Zylinderkopf (3), eine Düse oder Öffnung für den Anschluss an einen Schlauch (23) oder ein Rohr aufweist, das mit dem Abgaskanal (14) in Verbindung steht; wobei das Überdrucksicherheitsventil (15) so angepasst wird, dass wenn der Druck in der Verbrennungskammer (9) einen bestimmten Wert überschreitet, der kugelzylindrische Teil (33) aus seinem Sitz steigt und den Verbindungskanal (16) zwischen der Verbrennungskammer (9) und dem Abgaskanal (14) öffnet, wodurch einem Druckluftstrom ermöglicht wird, durch diesen Kanal (16) von der Brennkammer (9) zum Abgaskanal (14) durchzulaufen, um den notwendigen und erforderlichen Druck in der Brennkammer (9) aufrechtzuerhalten.

6. Verbrennungsmotor, der mit alternativen Kraftstoffen nach Anspruch 1, 2 oder 3 betrieben wird, **dadurch gekennzeichnet, dass** sie für jeden Zylinder Folgendes umfasst:
- Eine erste Pflanzenöleinspritzdüse (18) mit einer Öffnung mit kleinen Löchern oder Diffusoren (54) der Düse (38), durch die das Pflanzenöl aus der Einspritzdüse (18) austritt, und mit einem kleinen freien Raum zwischen der Spitze (52) des Einspritzstiftes (39) und der Innenwand (53) der Düse (38) nahe der Spitze (52) des Einspritzstiftes (39), der auf der Düse (38) aufliegt, jedoch genügend Raum lässt, damit der Pflanzenölstrom bei der Durchführung der Einspritzung ohne Schwierigkeiten durchlaufen kann, so dass das Volumen des Pflanzenöls bei der von der Einspritzdüse (18) in jedem Drehzahlregime des Motors durchgeführten Einspritzung ausreicht, um den vorgesehenen Anteil an Pflanzenöl zu liefern,
- Eine zweite Wassereinspritzdüse (19) mit einer Öffnung mit kleinen Löchern oder Diffusoren (57) der Düse (38), durch die das Wasser aus der Einspritzdüse (19) austritt, und mit einem kleinen freien Raum zwischen der Spitze (55) des Einspritzstiftes (39) und der Innenwand (56) der Düse (38) in der Nähe der Spitze (55) des Einspritzstiftes (39), der auf der Düse (38) aufliegt, jedoch genügend Raum lässt, damit der Wasserstrom ohne Schwierigkeiten durchlaufen kann, wenn die Einspritzung durchgeführt wird, so dass das Wasservolumen bei der von der Einspritzdüse (19) in jedem Drehzahlregime des Motors durchgeführten Einspritzung ausreicht, um den vorgesehenen Anteil an Wasser zu liefern.

7. Verbrennungsmotor, der mit alternativen Kraftstoffen nach Anspruch 1, 2, 6 und 3 betrieben wird, **dadurch gekennzeichnet, dass** er Folgendes umfasst:
einen in der Einspritzdüse (38) untergebrachten Einspritzstift (39), der mit dem Kontrollschaft (40) der Einspritzdüse einstückig ist oder durch Schrauben mit ihm verbunden ist, wobei dieser Schaft (40) einige Lippen oder Laschen (44) aufweist, die senkrecht zur Längsrichtung des Schafts (40) angeordnet sind;
wobei auf diesen Lippen oder Nasen (44) eine Feder (45) aufliegt, die durch eine mit Gelenken (46a) versehene Rohrschraube (46), die an ihren beiden Enden mit dem Gehäuse der Einspritzdüse verschraubt ist, angedrückt wird;
wobei diese Schraube (46) und Verbindungen (46a mit Spalten oder Löchern ausgestattet sind, um den Kraftstoffeinlasskanal (41) zur Düse sowie den Kraftstoffrücklaufkanal (43) nicht zu versperren;
wobei auf dem oberen Teil der Einspritzdüse und im Inneren einer Kammer (48) ein Elektromagnet (49) angeordnet ist, der mit dem oberen Teil des Gehäuses der Einspritzdüse über Ankerringe (49a) verbunden ist, die durch einen Zylinder aus Weicheisen oder Stahl gebildet werden, der auf seiner Unterseite eine zylindrische, zentrierte Aussparung und eine Spule (50) aufweist, deren Windungen um den zylindrischen Metallteil gewickelt sind;
wobei ein zylindrisches Teil (47), das mit dem oberen Teil des Schafts verschraubt oder verbunden ist, aus Weicheisen oder Stahl mit einer zylindrischen, zentrierten Aussparung auf seiner Oberseite ist;
wobei dieses Teil (47) ebenfalls in der Kammer (48), in der Nähe und gegenüber dem Elektromagneten (49) angeordnet ist und von diesem durch eine kleine Feder (51), die in den vorgenannten Aussparungen untergebracht ist, in kurzer Entfernung getrennt wird.

8. Verbrennungsmotor, der mit alternativen Kraftstoffen betrieben wird, nach Anspruch 1, 2 oder 3, **dadurch gekennzeichnet, dass** er zwei Einspritzsysteme umfasst:
- Eines für Pflanzenöl (58), das die Pflanzenöleinspritzdüsen (18) und einen oder mehrere Heizer (64) verwendet;
- und ein weiteres für Wasser (75), das die Wassereinspritzdüsen (19) und einen Heizer (81) verwendet.

9. Verbrennungsmotor, der mit alternativen Kraftstoffen betrieben wird, nach Anspruch 1, 2 oder 3, **dadurch gekennzeichnet, dass** sein elektrisches System mindestens eine oder zwei elektronische Steuereinheiten umfasst, welche den Zeitpunkt der Mehrpunkteinspritzung des Pflanzenöls steuern und regeln, wobei sie das Steuern der Einspritzdüsen (18) ermöglichen, so dass die sequentielle Einspritzung im Ansaugtakt zum genauen Zeitpunkt und in der genauen Frequenz entsprechend der Drehzahl des Motors erfolgt, wobei sie zu diesem Zweck mit Aktuatoren, Sensoren und Sonden ausgestattet sind, sowie den Zeitpunkt der Mehrpunkteinspritzung des Wassers steuern und regeln, wobei sie das Steuern der Einspritzdüsen (19) ermöglichen, so dass die sequentielle Einspritzung im Kompressionshub zum genauen Zeitpunkt und in der genauen Frequenz entsprechend der Drehzahl des Motors erfolgt, wobei sie mit Aktuatoren, Sensoren und Sonden für diesen Zweck ausgestattet sind.

10. Verbrennungsmotor, der mit alternativen Kraftstoffen betrieben wird, nach Anspruch 1 und 3, **dadurch gekennzeichnet, dass** die Hilfsvorverbrennungskammer (10) für jeden Zylinder (5) eine innere Form umfasst, die die eines Ellipsoids ist, das von der Düse (24) der Vorbrennkammer (10) geschnitten wird, und zum Zylinder (5) des Motors führt.

11. Verbrennungsmotor, der mit alternativen Kraftstoffen betrieben wird, nach Anspruch 1, 2 oder 3, **dadurch gekennzeichnet, dass** die Glühstifte oder -kerzen (17), die zum Starten des Motors verwendet werden, in der Lage sind, die Temperatur der Luft und des anzusaugenden Pflanzenöls zum Zeitpunkt der Erwärmung zu erhöhen, um den Motor auf eine Temperatur von etwa 210°C zu starten.

12. Verbrennungsmotor, der mit alternativen Kraftstoffen betrieben wird, nach Anspruch 1, 2 oder 3, **dadurch gekennzeichnet, dass** das Startsystem für den Motor im Wesentlichen die folgenden Prozesse und Elemente umfasst:
Ein dritter elektrischer Stromkreis wird nach kurzer Zeit durch einen Zeitschalter eingeschaltet, der eine Kraftstoffansaugpumpe (71) aktiviert, die im Pflanzenöltank (69) untergetaucht angeordnet ist;
ein vierter elektrischer Stromkreis, der gleichzeitig in der gleichen Weise wie die dritte aktiviert wird, aktiviert die Einspritzdüsen (18), die mit einem automatischen Schalter, einer Uhr oder einem Zeitgeber ausgestattet sind, der nach einer vordefinierten Zeit von der elektrischen Versorgung der Batterie getrennt wird; somit werden, wenn der Startschalter in seine zweite Stellung gebracht wird, drei der vier oben genannten Stromkreise getrennt, und nur der Stromkreis der Glühstifte oder -kerzen (17) bleibt angeschlossen, während drei andere Stromkreise angeschlossen sind;
wobei einer dieser drei Stromkreise die synchronisierte und sequentielle Einspritzung aus den Pflanzenöleinspritzdüsen (18) mittels einer elektronischen Einheit steuert, wobei ein weiterer Stromkreis die synchronisierte und sequentielle Einspritzung aus Wassereinspritzdüsen (19) durch die elektronische Steuereinheit steuert und der dritte Stromkreis den Anlasser und damit die Verteilerkette, die Hochdruckpumpen, die Kurbelwelle (8), das Schwungrad und schließlich die Kolben (6) startet.

13. Verbrennungsmotor, der mit alternativen Kraftstoffen betrieben wird, nach Anspruch 1, 2 oder 3 **dadurch gekennzeichnet, dass** bei seinen Einspritzvorschüben die für die Verbrennung erforderlichen Zeitparameter sowie die Ausbreitungs- und Gesamtentzündungszeiten des Kraftstoffgemisches (Pflanzenöl und Wasser) berücksichtigt und gemessen werden, die durch die elektronische(n) Steuereinheit(en) gesteuert werden, welche den Vorschub, der für das Vorschieben der Pflanzenöleinspritzung zu ihrem Zeitpunkt und die Wassereinspritzung zu ihrem Zeitpunkt liefert, so dass das Gemisch ohne Verzögerung verbrennt, wobei vorhersehbar ist, dass die gesamte Kraft der Verbrennung auf den Kopf oder Boden des Kolbens, wenn er sich in der oberen Totpunktposition befindet; wobei der Abstand vom Kolbenkopf zum oberen Totpunkt zum Zeitpunkt der Wassereinspritzung von dem Wassereinspritzvorschub und dem Abstand vom Kolbenkopf zum unteren Totpunkt zum Zeitpunkt der Pflanzenöleinspritzung von dem Pflanzenöleinspritzvorschub abhängt; wobei diese Einspritzvorschübe (Pflanzenöl und Wasser) je nach der Drehzahl des Motors durchgeführt werden, so dass sie umso größer sind, je schneller der Motor rotiert; wobei all dies wird von einem oder zwei elektronischen Steuereinheiten gesteuert wird, die jeweils die idealen Parameter für die Einspritzvorschübe des Pflanzenöls und des Wassers bestimmen.

14. Verbrennungsmotor, der mit alternativen Kraftstoffen betrieben wird, nach Anspruch 1, 2 oder 3, **dadurch gekennzeichnet, dass** bei der Herstellung der Zylinder durch Gießen mit dem entsprechenden Motorblock ohne Verwendung von Zylinderlaufbuchsen dieser Motorblock aus den folgenden Werkstoffen hergestellt wird:
- Rostfreiem Stahl, entweder mit einer Legierung aus Eisen, Kohlenstoff, Chrom und Nickel oder einer Legierung nur aus Eisen, Kohlenstoff und Nickel,
- Gussmaterial, das anschließend eine Nickelbeschichtung auf die Zylinder aufbringt,
- Gussmaterial, das anschließend eine keramische Beschichtung oder eine Emaille- oder Keramik-Kristall-Emaille-Beschichtung auf die Zylinder aufbringt.

15. Verbrennungsmotor, der mit alternativen Kraftstoffen betrieben wird, nach Anspruch 1, 2 oder 3, **dadurch gekennzeichnet, dass**, wenn die Zylinder (5) mit Zylinderlaufbuchsen (20) versehen sind, diese aus den folgenden Werkstoffen hergestellt sind:
- Rostfreiem Stahl, entweder mit einer Legierung aus Eisen, Kohlenstoff, Chrom und Nickel oder einer Legierung nur aus Eisen, Kohlenstoff und Nickel,
- Stahl mit einer Nickelbeschichtung,
- Stahl mit einer keramischen Beschichtung oder einer Email- oder Keramik-Kristall-Emaille-Beschichtung auf der Innenseite.

## Revendications

1. Moteur à combustion interne qui utilise des combustibles alternatifs pour son fonctionnement, analogue à des moteurs à combustion interne alternatifs du type à compression, comprenant un procédé de travail qui utilise conjointement comme combustibles de l'huile végétale et de l'eau, et pour l'exécution dudit procédé le moteur est doté des éléments suivants et des opérations suivantes :
- un injecteur d'huile végétale (18) pour chaque cylindre (5), situé dans la culasse de cylindre (3),
- un injecteur d'eau (19) pour chaque cylindre (5), situé dans la culasse de cylindre (3),
- deux réservoirs de stockage de combustible indépendants (69, 86), un pour l'huile végétale et un pour l'eau,
- l'huile végétale est injectée dans la course d'admission de moteur, à tout moment dans celle-ci, et de préférence à un moment où le piston (6) atteint le point mort bas,
**caractérisé en ce que** :
- une soupape de sécurité contre les surpressions (15) pour chaque cylindre est située dans la chambre de combustion (9), qui communique par le biais d'un tuyau avec le tuyau d'échappement (14),
- l'injection d'eau ou de vapeur est réalisée dans la course de compression de moteur, peu avant que le piston (6) n'atteigne le point mort haut,
- le pourcentage en volume d'huile végétale injectée est de 50 % à 99 %, et celui d'eau ou de vapeur injectée est de 1 % à 50 %.

2. Moteur à combustion interne qui utilise des combustibles alternatifs pour son fonctionnement, selon la revendication 1, **caractérisé en ce qu'**il s'agit d'un moteur à injection directe, de sorte que dans son processus de travail de l'huile végétale et de l'eau sont injectées en alternance directement dans les cylindres de moteur (5).

3. Moteur à combustion interne qui utilise des combustibles alternatifs pour son fonctionnement, selon la revendication 1, **caractérisé en ce qu'**il s'agit d'un moteur à injection indirecte, de sorte que dans son processus de travail de l'huile végétale et de l'eau sont injectées en alternance dans une chambre de précombustion auxiliaire (10) adjacente à chaque cylindre de moteur (5), cette action d'injection faisant possiblement partie d'une éclaboussure d'huile végétale et de la chute de cette dernière dans le cylindre adjacent (5) raccordé à la chambre de précombustion auxiliaire (10).

4. Moteur à combustion interne qui utilise des combustibles alternatifs pour son fonctionnement, selon les revendications 1, 2 ou 3, **caractérisé en ce que** le piston (6) a une encoche (32) d'une forme définie par l'intersection d'un capuchon sphérique concave et d'un cône tronqué inversé, présentant des intersections arrondies, cette encoche (32) étant centrée au niveau de la base ou de la tête du piston (6), et ayant un diamètre circulaire de la base supérieure du cône qui est inférieur au diamètre du piston (6).

5. Moteur à combustion interne qui utilise des combustibles alternatifs pour son fonctionnement, selon les revendications 1, 2 ou 3, **caractérisé en ce que** la soupape de sécurité contre les surpressions (15) est dotée d'une partie métallique (33) d'une forme définie par une petite sphère et un petit cylindre qui se croisent de façon centrale, à savoir, l'axe de cylindre parallèle à ses lignes génératrices intercepte le centre de la sphère, dans lequel le diamètre de la sphère est supérieur à celui du cylindre ; cette partie (33) repose au niveau de sa partie sphérique sur un siège situé sur le tuyau (16), fermant le tuyau (16) au niveau de ce point lorsque la partie (33) est poussée par un ressort (34) reposant sur la surface sphérique de ladite partie métallique (33), son diamètre interne étant tangent (avec un certain dégagement) au cylindre de la partie sphérique-cylindrique (33), le ressort (34) étant poussé au niveau de son autre extrémité par une vis de forme tubulaire (22), à savoir, creuse sur l'intérieur, cette vis (22) ayant un siège pour le ressort (34), un filetage pour permettre un vissage sur la culasse de cylindre (3), une buse ou une ouverture pour un raccordement à un tuyau souple (23) ou tube qui communique avec le tuyau d'échappement (14) ; avec la soupape de sécurité contre les surpressions (15) conformée de cette manière, lorsque la pression dans la chambre de combustion (9) dépasse une valeur spécifiée, la partie sphérique-cylindrique (33) s'élève à partir de son siège, ouvrant le tuyau de communication (16) entre la chambre de combustion (9) et le tuyau d'échappement (14), permettant par conséquent à un flux d'air comprimé de passer à travers ce tuyau (16) à partir de la chambre de combustion (9) vers le tuyau d'échappement (14), pour maintenir la pression nécessaire et requise dans la chambre de combustion (9).

6. Moteur à combustion interne qui utilise des combustibles alternatifs pour son fonctionnement, selon les revendications 1, 2 ou 3, **caractérisé en ce qu'**il comprend pour chaque cylindre :
- un premier injecteur pour l'huile végétale (18) doté d'une ouverture ayant des petits orifices ou diffuseurs (54) de la buse (38) à travers lesquels l'huile végétale quitte l'injecteur (18), et d'un petit espace libre entre le point (52) de la broche d'injection (39) et la paroi interne (53) de la buse (38) près du point (52) de la broche d'injection (39) qui repose sur la buse (38), mais laissant un espace suffisant pour permettre au flux d'huile végétale de passer sans difficulté lorsque l'injection est réalisée, de sorte que le volume d'huile végétale dans l'injection réalisée par l'injecteur (18) dans un quelconque régime de tours du moteur est suffisant pour fournir la proportion prévue d'huile végétale,
- un second injecteur pour l'eau (19) doté d'une ouverture ayant des petits orifices ou diffuseurs (57) de la buse (38) à travers lesquels l'eau quitte l'injecteur (19), et d'un petit espace libre entre le point (55) de la broche d'injection (39) et la paroi interne (56) de la buse (38) près du point (55) de la broche d'injection (39) qui repose sur la buse (38), mais laissant suffisamment d'espace pour permettre au flux d'eau de passer sans difficulté lorsque l'injection est réalisée, de sorte que le volume d'eau dans l'injection réalisée par l'injecteur (19) dans un quelconque régime de tours du moteur est suffisant pour fournir la proportion d'eau prévue.

7. Moteur à combustion interne qui utilise des combustibles alternatifs pour son fonctionnement, selon les revendications 1, 2, 6 et 3, **caractérisé en ce qu'**il comprend :
une broche d'injection (39) logée dans la buse d'injection (38) qui forme une seule pièce avec la tige de commande (40) de l'injecteur, ou est assemblée à celle-ci par des vis, cette tige (40) ayant des lèvres ou languettes (44) disposées perpendiculairement à la direction longitudinale de la tige (40) ;
un ressort (45) repose sur ces lèvres ou languettes (44), qui est pressé par une vis tubulaire (46) dotée de joints (46a) qui est vissée sur ses deux extrémités au boîtier de l'injecteur ;
cette vis (46) et ces joints (46a) sont dotés de vides ou d'orifices afin de ne pas obstruer le canal d'admission de combustible (41) dans la buse, ainsi que le canal de retour de combustible (43) ;
sur la partie supérieure de l'injecteur et à l'intérieur d'une chambre (48) est disposé un électroaimant (49) qui est assemblé à la partie supérieure du boîtier de l'injecteur par le biais de bagues d'ancrage (49a) formées par un cylindre de fer doux ou d'acier, qui sur sa face inférieure a un évidement centré cylindrique et une bobine (50) dont les spires sont enroulées autour de ladite partie métallique cylindrique ;
une partie cylindrique (47) de fer doux ou d'acier dotée d'un évidement centré cylindrique réalisé sur sa face supérieure est filetée ou assemblée à la partie supérieure de la tige (40) ;
cette partie (47) est également placée dans la chambre (48), près de et opposée à l'électroaimant (49) et séparée de celui-ci d'une courte distance par un petit ressort (51) logé dans les évidements susmentionnés.

8. Moteur à combustion interne qui utilise des combustibles alternatifs pour son fonctionnement, selon les revendications 1, 2 ou 3, **caractérisé en ce qu'**il comprend deux systèmes d'injection :
- un pour l'huile végétale (58) qui utilise les injecteurs d'huile végétale (18) et un ou plusieurs appareils de chauffage (64) ;
- et un autre pour l'eau (75) qui utilise les injecteurs d'eau (19) et un appareil de chauffage (81).

9. Moteur à combustion interne qui utilise des combustibles alternatifs pour son fonctionnement, selon les revendications 1, 2 ou 3, **caractérisé en ce que** son système électrique comprend au moins une ou deux unités de commande électronique qui commandent et régulent la synchronisation de l'injection multipoint d'huile végétale, permettant de commander les injecteurs (18) de sorte que l'injection séquentielle est réalisée sur la course d'admission, au moment précis et à la fréquence précise selon la vitesse de rotation du moteur, qui est doté d'actionneurs, de capteurs et de sondes à cette fin, ainsi que de commander et réguler la synchronisation de l'injection multipoint d'eau, permettant de commander les injecteurs (19) de sorte que l'injection séquentielle est réalisée dans la course de compression, au moment précis et à la fréquence précise selon la vitesse de rotation du moteur, qui est doté d'actionneurs, de capteurs et de sondes à cette fin.

10. Moteur à combustion interne qui utilise des combustibles alternatifs pour son fonctionnement, selon les revendications 1 et 3, **caractérisé en ce que** la chambre de précombustion auxiliaire (10) pour chaque cylindre (5) comprend une forme interne qui est celle d'un ellipsoïde croisé par la buse (24) de ladite chambre de précombustion (10), et mène au cylindre (5) du moteur.

11. Moteur à combustion interne qui utilise des combustibles alternatifs pour son fonctionnement, selon les revendications 1, 2 ou 3, **caractérisé en ce que** les bougies incandescentes ou de chauffage (17) utilisées pour démarrer le moteur sont capables d'augmenter la température de l'air et de l'huile végétale d'amorçage au moment du chauffage afin de démarrer le moteur à une température d'environ 210 °C.

12. Moteur à combustion interne qui utilise des combustibles alternatifs pour son fonctionnement, selon les revendications 1, 2 ou 3, **caractérisé en ce que** le système de démarrage pour le moteur comprend essentiellement les processus et éléments suivants :
un troisième circuit électrique est activé après un court moment régulé par un synchronisateur qui active une pompe d'amorçage de combustible (71), disposée immergée dans le réservoir d'huile végétale (69) ;
un quatrième circuit électrique activé simultanément de la même manière que le troisième active les injecteurs (18) dotés d'un commutateur, d'une horloge ou d'un synchronisateur automatique qui après un moment prédéfini est déconnecté(e) de l'alimentation électrique de la batterie ; ainsi, lorsque le commutateur de démarrage est placé dans sa seconde position, trois des quatre circuits susmentionnés seront déconnectés, et seul le circuit des bougies incandescentes ou appareils de chauffage (17) restera connecté, alors que trois autres circuits sont connectés ;
l'un de ces trois circuits commande l'injection synchronisée et séquentielle des injecteurs d'huile végétale (18) au moyen d'une unité électronique, un autre circuit commande l'injection synchronisée et séquentielle des injecteurs d'eau (19) par l'unité de commande électronique, et le troisième circuit démarre le moteur de démarrage et ainsi la chaîne de distribution, les pompes à haute pression, le vilebrequin (8), le volant et enfin les pistons (6).

13. Moteur à combustion interne qui utilise des combustibles alternatifs pour son fonctionnement, selon les revendications 1, 2 ou 3, **caractérisé en ce que** dans ses avances d'injection les paramètres de temps nécessaire pour obtenir une combustion seront pris compte et mesurés, ainsi que les temps de propagation et d'inflammation totale du mélange de combustibles (huile végétale et eau), commandés par l'unité ou les unités de commande électronique, qui fournira/fourniront l'avance nécessaire pour faire avancer l'injection d'huile végétale et l'injection d'eau à leurs moments respectifs, de sorte que le mélange subisse une combustion sans délai, pourvu que la totalité de la force de la combustion soit exercée sur la tête ou base du piston lorsqu'il se trouve dans la position de point mort haut ; la distance entre la tête de piston et le point mort haut au moment de l'injection d'eau dépendant de l'avance d'injection d'eau, et la distance entre la tête de piston et le point mort bas au moment de l'injection d'huile végétale dépendant de l'avance d'injection d'huile végétale ; ces avances d'injection (huile végétale et eau) sont réalisées en fonction de la vitesse de rotation du moteur, de sorte qu'elles augmenteront avec la vitesse de rotation du moteur ; tout cela est commandé par une ou deux unités de commande électronique qui va/vont déterminer les paramètres idéaux à chaque moment d'avance d'injection de l'huile végétale et de l'eau.

14. Moteur à combustion interne qui utilise des combustibles alternatifs pour son fonctionnement, selon les revendications 1, 2 ou 3, **caractérisé en ce que** lorsque les cylindres sont fabriqués par coulée avec le bloc moteur correspondant, sans utiliser de chemise de cylindre, ce bloc moteur est composé des matériaux suivants :
- acier inoxydable, soit avec un alliage de fer, de carbone, de chrome et de nickel, soit avec un alliage de fer, de carbone et de nickel seulement,
- matériau de coulée, incorporant ensuite un revêtement de nickel sur les cylindres,
- matériau de coulée, incorporant ensuite un revêtement de céramique ou un revêtement d'émail vitreux ou d'émail cristallin céramique sur les cylindres.

15. Moteur à combustion interne qui utilise des combustibles alternatifs pour son fonctionnement, selon les revendications 1, 2 ou 3, **caractérisé en ce que** si les cylindres (5) incorporent des chemises de cylindre (20), celles-ci sont composées des matériaux suivants :
- acier inoxydable, soit avec un alliage de fer, de carbone, de chrome et de nickel, soit avec un alliage de fer, de carbone et de nickel seulement,
- acier avec un revêtement de nickel,
- acier avec un revêtement de céramique ou un revêtement d'émail vitreux ou cristallin céramique sur son intérieur.
